# EUROPEAN PATENT APPLICATION

(11) **EP 4 834 066 A1**
(43) Date of publication of application: **04.11.2026**
(21) Application number: 24912212.8
(22) Date of filing: 02.12.2024
(51) Int. Cl.: A01B 69/00

(54) **REMOTE DEVICE AND REMOTE OPERATION SYSTEM**

(30) Priority: 27.12.2023 JP 2023221130
(71) Applicant: KUBOTA CORPORATION, Osaka-shi, Osaka 530-0011 (JP)
(72) Inventor: FUJII Takafumi, Sakai-shi, Osaka 590-0908 (JP)
(74) Representative: Cabinet Beau de Loménie
(86) International application number: PCT/JP2024/042558
(87) International publication number: WO 2025/142322

(57) **Abstract**

To achieve remote manipulation of a plurality of different types of remote working machines (1).

A remote device (30) includes a first communicator (33) to communicate with a plurality of types of remote working machines (1), a remote manipulator (35) to remotely manipulate a remote working machine (1) which is one of the plurality of types of remote working machines (1) via the first communicator (33), and a display (34) to display, on a remote manipulation screen (G), information relating to remote manipulation of the remote working machine (1). The display (34) is configured to cause at least one of (i) display information to be displayed on the remote manipulation screen (G) or (ii) a display form of the display information to differ depending on a type of the remote working machine (1).

## Description

### Technical Field

The present invention relates to remote devices that remotely manipulate working machines, and remote manipulation systems.

### Background Art

A known remote control system generates a monitoring screen to monitor the driving state and working state of a working vehicle, and causes a display to display the monitoring screen (for example, PTL 1).

### Citation List

### Patent Literature

PTL 1: Japanese Unexamined Patent Application Publication No. 2021-36796

### Summary of Invention

### Technical Problem

However, the remote manipulation system of PTL 1 does not consider a case where different types of working vehicles (working machines) are to be remotely manipulated.

The present invention has been made to solve such an issue in the related art, and it is an object of the present invention to provide a remote device and a remote manipulation system that can achieve remote manipulation of different types of remote working machines. Solution to Problem

A remote device according to an example embodiment of the present invention includes a first communicator to communicate with a plurality of types of remote working machines, a remote manipulator to remotely manipulate a remote working machine which is one of the plurality of types of remote working machines via the first communicator, and a display to display, on a remote manipulation screen, information relating to remote manipulation of the remote working machine, wherein the display is configured to cause at least one of (i) display information to be displayed on the remote manipulation screen or (ii) a display form of the display information to differ depending on a type of the remote working machine.

The display may be configured to display, on the remote manipulation screen, (i) a main display area in which the display information and the display form of the display information are common to the plurality of types of working machines and (ii) a sub-display area in which at least one of the display information or the display form of the display information differs depending on the type of the remote working machine.

The sub-display area may be adjacent to the main display area and be around the main display area.

The display may be configured to display, in the main display area, one or more captured images each of which is an image of an area in a direction common to the plurality of types of working machines, and display, in the sub-display area, one or more captured images each of which is an image of an area in a direction that differs depending on the type of the remote working machine.

The display may be configured to display, in a first main area of the main display area, a first captured image of an area in a direction of travel of the remote working machine.

The first main area may be located at a central portion of the remote manipulation screen.

The display may be configured to, in a first sub-area of the sub-display area, in a case that the remote working machine is a first working machine, display a second captured image of a surrounding area of a working device of the first working machine that is an area in a direction different from the first captured image, and in a case that the remote working machine is a second working machine of a different type from the first working machine, display a third captured image of an area in a direction different from the direction of travel.

The second captured image may be an image of an area in a direction opposite to the direction of travel.

The display may be configured to display device information relating to a working device of the remote working machine. The device information may differ depending on the type of the remote working machine and be displayed at least in a second sub-area of the sub-display area.

The display may be configured to display, in a third sub-area of the sub-display area, the device information or a fourth captured image of an area in a lateral direction of the remote working machine depending on the type of the remote working machine.

The display may be configured to, in a fourth sub-area of the sub-display area, display a map image indicating a position of the remote working machine and display, on the map image, supplementary information that differs depending on the type of the remote working machine, the map image and the supplementary information being included in the information relating to the remote manipulation.

The display may be configured to display, on the map image, guidance to assist with work performed by the remote working machine according to content of the work, the guidance being included in the supplementary information.

The display may be configured to display, in a second main area of the main display area, drive information indicating information relating to a drive system of the remote working machine that includes at least one of a prime mover of the remote working machine or a traveling device of the remote working machine, the drive information being included in the information relating to the remote manipulation.

The display may be configured to, when there is an alert condition in the remote working machine, display alert information relating to the alert condition in the main display area of the remote manipulation screen.

The display may be configured to display, in a first main area of the main display area, a first captured image of an area in a direction of travel of the remote working machine, the first captured image being included in the information relating to the remote manipulation, and display, in a second main area of the main display area, drive information indicating information relating to a drive system of the remote working machine that includes at least one of a prime mover of the remote working machine or a traveling device of the remote working machine, the drive information being included in the information relating to the remote manipulation. The first main area and the second main area may be arranged in an up-down direction. The alert information may be displayed on the first main area or the second main area such that the alert information is superimposed on at least one of the first main area or the second main area.

The plurality of types of remote working machines may include at least two of a tractor with a working device attached thereto, a rice transplanter, or a combine.

The first working machine may include at least one of the tractor or the rice transplanter. The second working machine may include the combine.

The display may be configured to, in a case that the type of the remote working machine is the tractor, display information relating to the working device attached to the tractor, the information relating to the working device being included in the device information, in a case that the type of the remote working machine is the rice transplanter, display at least a remaining amount of seedlings or a seedling material including the seedlings, the remaining amount being included in the device information, and in a case that the type of the remote working machine is the combine, display a remaining capacity of a grain tank of the combine, the remaining capacity being included in the device information.

A remote manipulation system according to an example embodiment of the present invention includes a remote device, and a remote working machine to be remotely manipulated by the remote device, wherein the remote working machine includes a second communicator to mutually communicate with the first communicator.

### Advantageous Effects of Invention

According to the present invention, remote manipulation of different types of remote working machines can be achieved.

### Brief Description of Drawings

[FIG. 1A] FIG. 1A is a block diagram of a remote manipulation system in an example embodiment of the present invention.
[FIG. 1B] FIG. 1B is a block diagram of a remote manipulation system in an example embodiment of the present invention.
[FIG. 1C] FIG. 1C is a block diagram of a remote manipulation system in an example embodiment of the present invention.
[FIG. 2A] FIG. 2A is a side view of a tractor which is an example of a remote working machine.
[FIG. 2B] FIG. 2B is a side view of a rice transplanter which is an example of a remote working machine.
[FIG. 2C] FIG. 2C is a side view of a combine which is an example of a remote working machine.
[FIG. 3] FIG. 3 is a table illustrating an example of correspondence data.
[FIG. 4] FIG. 4 is a table illustrating another example of correspondence data.
[FIG. 5] FIG. 5 is a table illustrating an example of a display area on a remote manipulation screen.
[FIG. 6] FIG. 6 is a table illustrating an example of a correspondence table.
[FIG. 7A] FIG. 7A is a view illustrating an example of a remote manipulation screen when a tractor is remotely manipulated.
[FIG. 7B] FIG. 7B is a view illustrating an example of a remote manipulation screen when a rice transplanter is remotely manipulated.
[FIG. 7C] FIG. 7C is a view illustrating an example of a remote manipulation screen when a combine is remotely manipulated.
[FIG. 8] FIG. 8 is a flowchart illustrating a procedure for displaying a remote manipulation screen.

### Description of Embodiments

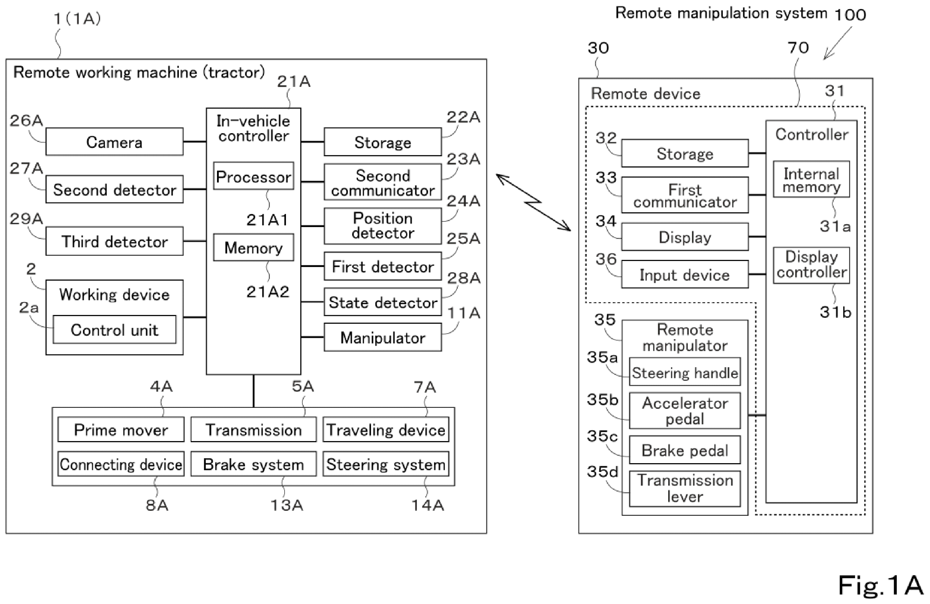

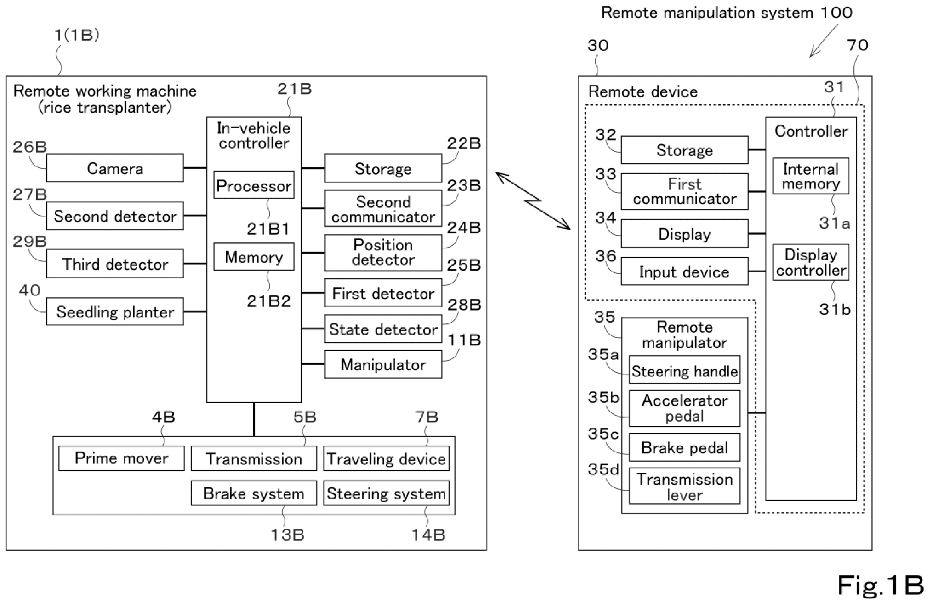

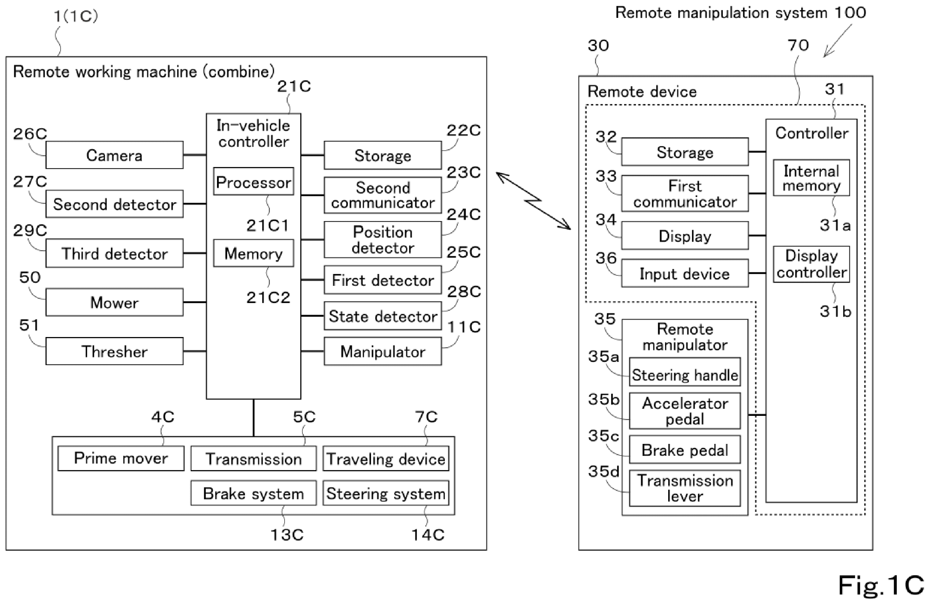

Hereinafter, example embodiments of the present invention will be described with reference to the drawings. FIG. 1A to FIG. 1C are block diagrams of a remote manipulation system 100 in an example embodiment of the present invention. The remote manipulation system 100 includes a remote working machine 1 and a remote device 30. The remote manipulation system 100 and the remote device 30 enable remote manipulation (or remote operation) of the remote working machine 1 and remote monitoring of the remote working machine 1. The remote working machine 1 is an agricultural machine (also referred to as a "remote manipulation agricultural machine") that enables remote operation (for example, remote traveling and remote working) by the remote device 30. The types of the remote working machines 1 to be remotely manipulated (remotely operated, remotely controlled) by the remote device 30 include at least two agricultural machines of a tractor 1A (FIG. 1A), a rice transplanter 1B (FIG. 1B), or a combine 1C (FIG. 1C). In the following description, as the remote working machine 1, the agricultural machine including an operator's seat 10 on which a user (operator) sits will be described as an example. However, the remote working machine 1 may be an agricultural machine dedicated to remote manipulation, not including an operator's seat 10 on which a user (operator) sits. First, the configuration of the remote working machine 1 will be described for each type.

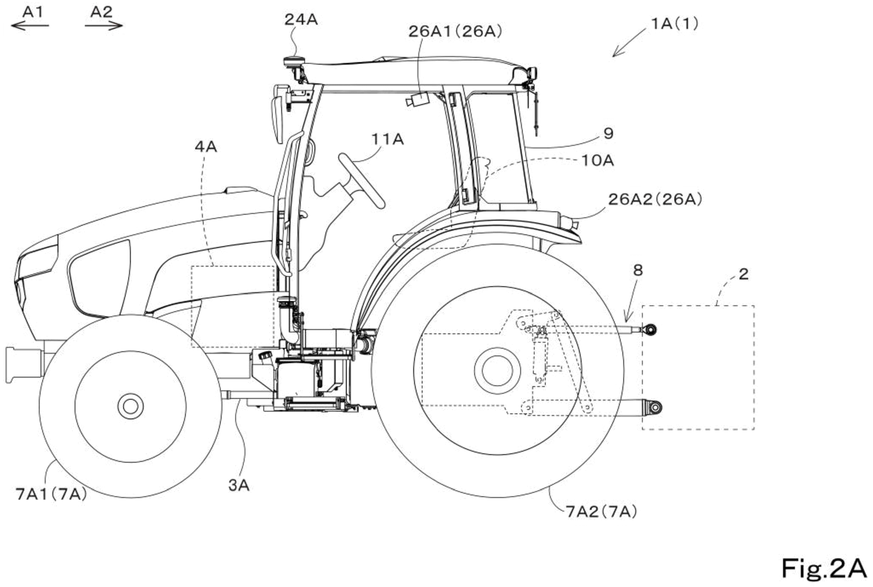

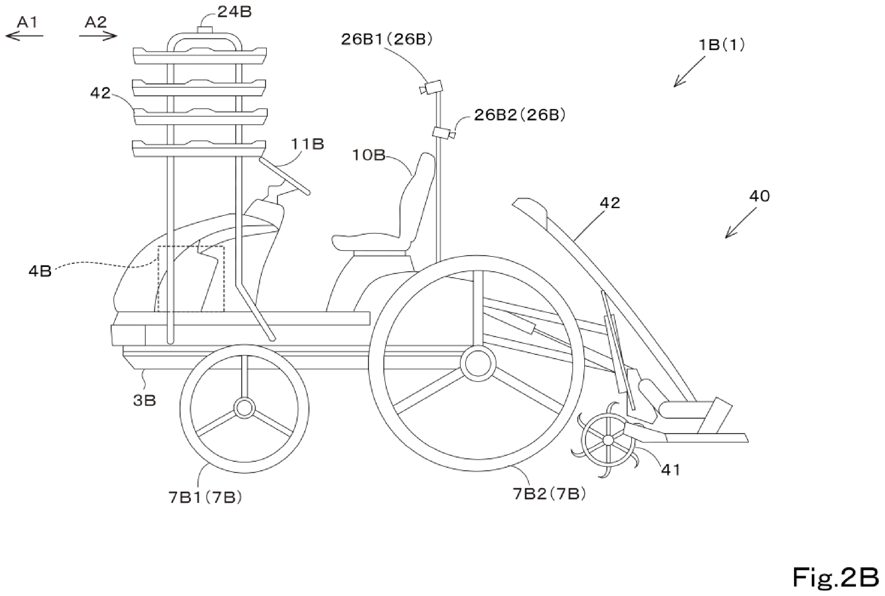

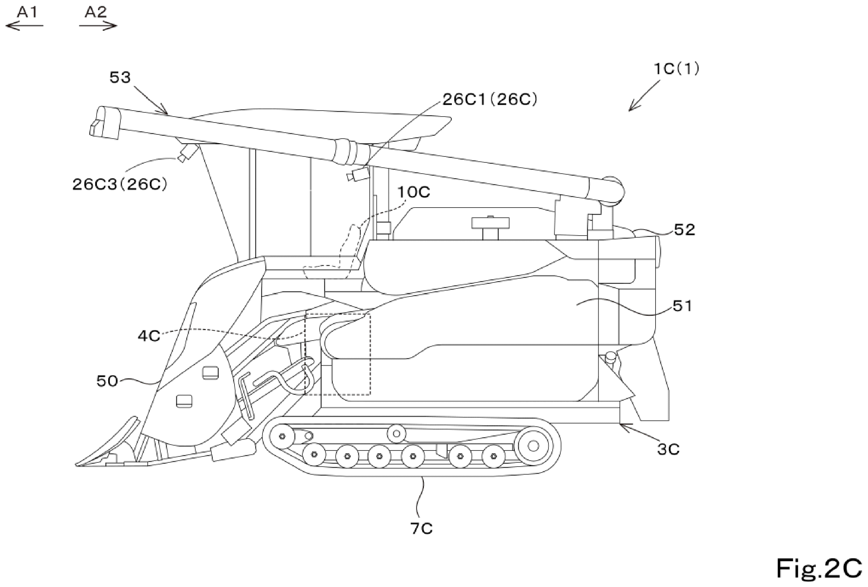

FIG. 2A is a side view of a tractor 1A which is an example of the remote working machine 1. Hereinafter, a description will be given assuming that the front side (arrow A1 direction in FIG. 2A) of a user sitting on the operator's seat 10 of the tractor 1A is forward, the rear side (arrow A2 direction in FIG. 2A) of the user is rearward, the left side of the user is leftward (the near side in FIG. 2), and the right side of the user is rightward (the far side in FIG. 2). Also, a description will be given assuming that a lateral direction perpendicular to the front-rear direction of the tractor 1A is a width direction. Note that the same applies to FIG. 2B and FIG. 2C mentioned below.

The tractor 1A includes a machine body 3A. The machine body 3A is provided with a traveling device 7A. The traveling device 7A includes front wheels 7A1 and rear wheels 7A2 on both right and left sides of the machine body 3A, respectively, to support and allow the machine body 3A to travel. The traveling device 7A may be a crawler device.

As illustrated in FIG. 1A and FIG. 2A, the tractor 1A includes a prime mover 4A, a transmission 5A, a brake system 13A, and a steering system 14A. The prime mover 4A is an engine (a diesel engine, a gasoline engine) or an electric motor. The transmission 5A changes the propelling force of the traveling device 7A, for example, by changing speed stages, and switches between forward travel and rearward travel of the traveling device 7A. The transmission 5A includes multiple gears to transmit power, a shifter to change connection between the gears, and a clutch to switch between transmission and disconnection of power, and changes speed stages by these components. The transmission 5A can switch the traveling mode between a state (4WD constant speed state) in which four wheels are driven (4WD), that is, the front wheels 7A1 and the rear wheels 7A2 are driven by power and the rotational speeds of the front wheels 7A1 and the rear wheels 7A2 are approximately the same, a state (4WD speed-up state) in which four wheels are driven and the rotational speed of the front wheels 7A1 is faster than the rotational speed of the rear wheels 7A2, and two-wheel drive (2WD) in which only rear wheels 7A2 are driven. Note that in the present example embodiment, the transmission 5A allows a main transmission unit (for example, continuously variable transmission), and an auxiliary transmission unit (for example, stepped transmission) to change speed stages independently. The transmission 5A is provided with a PTO (Power take-off) shaft to transmit (output) the power output by the prime mover 4A to the outside, and can transmit the power to the below-described working device 2. The brake system 13A controls the movement of the machine body 3A. The steering system 14A operates the machine body 3A such that it is oriented in a predetermined direction.

A manipulator 11A to manually operate the tractor 1A is provided around the operator's seat 10A. The tractor 1A allows unmanned travel and work. However, a user sitting on the operator's seat 10A can also cause the tractor 1A to travel and cause the working device 2 to perform work by operating the manipulator 11A. The manipulator 11A includes a steering wheel, an accelerator pedal, a brake pedal, and a transmission lever.

A connecting device 8 is provided at a rear portion of the machine body 3A. The connecting device 8 includes a three-point linkage or the like. The connecting device 8 can detachably connect the working device 2 to the machine body 3A. The tractor 1A (the machine body 3A) can tow the working device 2 by connecting the working device 2 to the connecting device 8, and causing the traveling device 7A to travel. The connecting device 8 can raise and lower the working device 2 and change the position thereof by driving an actuator (for example, a hydraulic cylinder).

The working device 2 includes, for example, a cultivator to cultivate soil, a fertilizer spreader to spread fertilizer, an agricultural chemical spreader to spread agricultural chemicals, a harvester to perform harvesting, a mower to mow grass and the like, a tedder to spread grass and the like, a rake to collect grass and the like, and a baler to bundle grass and the like. The working device 2 is actuated, for example, by the power transmitted by the PTO shaft provided in the tractor 1A. The working device 2 may include a hydraulic actuator to be driven by the hydraulic fluid delivered from a hydraulic pump of the tractor 1A, and may be operated by the hydraulic actuator. Alternatively, the working device 2 may include an electric actuator to be driven by supplied electric power, and may be operated by the electric actuator. The tractor 1A performs agricultural work on an agricultural field by operating these working devices 2.

As illustrated in FIG. 1A, the tractor 1A includes an in-vehicle controller 21A, a storage (memory and/or storage) 22A, a second communicator (in-vehicle communicator) 23A, a position detector 24A, a first detector (inertial measurement unit) 25A, a camera 26A, a second detector (sensing device) 27A, a state detector 28A, and a third detector 29A. In the tractor 1A, an in-vehicle network such as CAN, LIN, or FlexRay is constructed, and the in-vehicle controller 21A is electrically connected to the storage 22A, the second communicator 23A, the position detector 24A and the like.

The in-vehicle controller 21A is an electronic control unit (ECU) including a processor 21A1 and a memory 21A2. The in-vehicle controller 21A is a controller to control the operation of the components of the tractor 1A. The memory 21A2 includes a volatile or non-volatile memory or the like. The in-vehicle controller 21A controls an actuator group including electric or hydraulic motors, cylinders, and control valves to actuate the components of the tractor 1A, such as the prime mover 4A, the transmission 5A, the traveling device 7A, the brake system 13A, and the connecting device 8. The memory 21A2 of the in-vehicle controller 21A stores, in a readable and writable manner, various information and data for the in-vehicle controller 21A to control the operation of the components of the tractor 1A. The storage 22A is, for example, a solid state drive (SSD), a hard disk drive (HDD) and the like.

The second communicator 23A includes an antenna, an integrated circuit (IC), and an electric circuit to perform wireless communication via a mobile-phone communication network, the Internet or a wireless LAN. The in-vehicle controller 21A mutually communicates with a first communicator 33 of the remote device 30 wirelessly by the second communicator 23A. In addition, the in-vehicle controller 21A includes a real-time clock (RTC), and keeps track of the date and time.

Note that in the present example embodiment, an example is illustrated in which the tractor 1A and the remote device 30 communicate via a mobile-phone communication network or the like; however, alternatively, for example, the tractor 1A and the remote device 30 may communicate with a mobile-phone communication network via an external device such as a server or a repeater. The tractor 1A and the remote device 30 may directly communicate using a short-range wireless signal such as a BLU (Bluetooth (registered trademark) low energy) signal or an ultra-high frequency (UHF) signal. In this case, it is only necessary to use a configuration in which the second communicator 23A and the remote device 30 are provided with respective interfaces for short-range wireless communication.

The position detector 24A detects the position of itself (measured position information including the latitude and longitude) by utilizing a satellite positioning system. Specifically, the position detector 24A receives signals (positions of positioning satellites, time of sending, correction information and the like) transmitted from the positioning satellites, and detects the position of itself based on the signals. The position detector 24A may detect, as the position of itself, a position corrected based on signals for correction and the like from base stations (reference stations) which can receive the signals from the positioning satellites. The position detector 24A may calculate the position of the tractor 1A based on the detected position of itself, and pre-stored external shape information of the tractor 1A. The position detector 24A may calculate the position of the working device 2A based on the detected position of itself, pre-stored external shape information of the working device 2, and the mounting position of the working device 2A on the machine body 3A.

The first detector 25A includes a gyroscope sensor or an acceleration sensor or the like, and detects the roll angle, the pitch angle, the yaw angle and the like of the tractor 1A (the machine body 3A). In other words, the first detector 25A detects the position of the tractor 1A, inclined to the right or left and the front or rear with respect to a horizontal state.

The camera 26A captures and senses (monitors) the surrounding area of the tractor 1A. The camera 26A includes a CCD camera on which a charge coupled device (CCD) image sensor is mounted, or a CMOS camera on which a complementary metal oxide semiconductor (CMOS) image sensor is mounted. As illustrated in FIG. 2A, the camera 26A is installed at each of predetermined positions such as a front portion, a rear portion, right and left lateral portions of the tractor 1A, and the inside of a cabin 9 to capture image(s) of surrounding areas such as an area forward of, an area rear of, and areas on the right and left sides of the tractor 1A, and output data of the captured image.

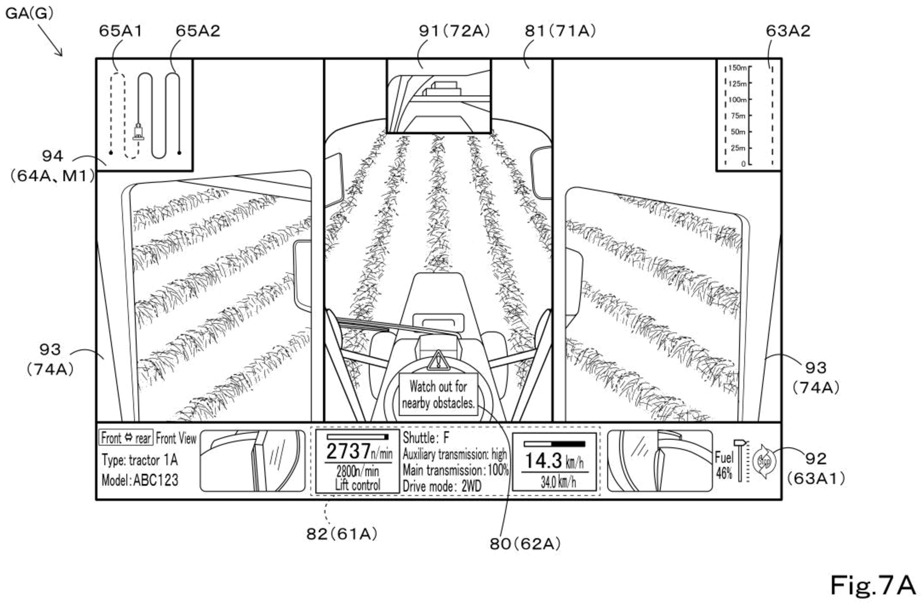

For example, as illustrated in FIG. 2A, a camera 26A1 installed inside the cabin 9 captures an image of an area forward of the tractor 1A from the operator's seat 10. More specifically, the camera 26A1 captures an image of an area forward (in the direction of travel, the arrow A1 direction) of the tractor 1A in approximately the same field of view as that of a user sitting on the operator's seat 10. That is, with the camera 26A1, a first captured image 71A (see FIG. 7A mentioned below) of an area in the direction of travel of the tractor 1A is obtained.

As illustrated in FIG. 2A, a camera 26A2 installed at a rear portion of the machine body 3A of the tractor 1A captures an image of an area rearward of the tractor 1A. More specifically, the camera 26A2 captures an image of an area in the direction (the arrow A2 direction) opposite to the field of view of a user sitting on the operator's seat 10. In other words, with the camera 26A2, a second captured image 72A (FIG. 7A) of an area in the direction opposite to the direction of travel of the tractor 1A is obtained. With a camera 26A4 installed at each of the right and left lateral portions of the machine body 3A of the tractor 1A, a fourth captured image 74A of a corresponding lateral side of the tractor 1A is obtained. The camera 26A outputs the captured image to the in-vehicle controller 21A as sensing information.

The second detector 27A is a sensing device other than the camera 26A to sense (monitor) the surrounding area of the tractor 1A. Specifically, the second detector 27A includes a LiDAR such as a laser sensor, or a sensor such as an ultrasonic sensor. The second detector 27A is installed at each of predetermined positions such as a front portion, a rear portion, and right and left lateral portions of the tractor 1A to detect the presence or absence of an object in the surrounding area forward of, rearward of, and/or on the right and left sides of the tractor 1A, and the distance to the object. The second detector 27A can also detect the presence or absence of an object, the position of an object, and the type of an object based on the data of the captured image output from the camera 26A.

The second detector 27A senses (monitors) the situation of surrounding area of the tractor 1A and the working device 2, and outputs sensing information indicating the results to the in-vehicle controller 21A. The sensing information includes at least the information on the presence or absence of an object, and the distance to an object. However, the sensing information may include, in addition to such information, the information detected by a laser sensor and an ultrasonic sensor.

When controlling the travel of the tractor 1A or the work performed by the working device 2, the in-vehicle controller 21A determines from the detection information of the second detector 27A whether an object approaches within a predetermined distance from the tractor 1A or the working device 2, and there is a risk of contact. When determining that an object approaches within a predetermined distance from the tractor 1A or the working device 2, and there is a risk of contact, the in-vehicle controller 21A controls the traveling device 7A or the working device 2 to automatically stop the travel or the work of the tractor 1A, and avoids the contact with the object.

The state detector 28A detects the operating state (drive state) of the tractor 1A. Specifically, the state detector 28A includes various sensors installed at corresponding positions of the tractor 1A (the machine body 3A), and a computing unit so that the computing unit detects (calculates) the operating state of the tractor 1A based on the output signals from the various sensors. The operating state of the tractor 1A detected by the state detector 28A includes information relating to a drive system of the remote working machine 1 (the tractor 1A) including at least one of the prime mover 4A or the traveling device 7A of the tractor 1A. The information relating to the drive system includes the state of drive and stop of each component of the tractor 1A, the direction of travel, and the traveling speed (or acceleration) of the tractor 1A, the number of revolutions (rotation speed) of the prime mover 4A, and the transmission switch position of the transmission 5A.

The state detector 28A acquires the position (position of the tractor 1A) of the machine body 3A, detected by the position detector 24A at a predetermined cycle, and may detect (calculate) the position of the working device 2 from the position of the machine body 3A, and detect the change (transition) in the position of the machine body 3A. Alternatively, the state detector 28A may detect the traveling speed of the machine body 3A from the change in the position of the machine body 3A. As another example, a rotation speed sensor is provided which detects the number of revolutions (rotation speed) of the front wheels 7A1, and the rear wheels 7A2 of the traveling device 7A, or the number of revolutions of a traveling motor to rotate the front wheels 7A1, and the rear wheels 7A2, and the state detector 28A may detect the traveling speed of the machine body 3A based on the output signal from the rotation speed sensor. Alternatively, the steering system 14A may be provided with a sensor, and the state detector 28A may detect the steering angle of the machine body 3A based on the output signal from the sensor.

The state detector 28A generates detection information indicating the detected operating state of the tractor 1A, and outputs the detection information to the in-vehicle controller 21A. The detection information includes the information relating to the drive system of the tractor 1A. For example, the information relating to the drive system from the state detector 28A includes information on at least one of the speed (or acceleration) of the tractor 1A (the traveling device 7A), the number of revolutions of the prime mover 4A, or the transmission switch position of the transmission 5A.

The third detector 29A detects device information 63A relating to the working device 2 included in (connected to) the tractor 1A. The third detector 29 includes various sensors installed at corresponding positions of the connecting device 8 and the working device 2, and a computing unit so that the computing unit detects (calculates) the operating state of the working device 2 based on the output signals from the various sensors. The device information 63A of the working device 2, detected by the third detector 29 includes the type of the working device 2, the state of attachment/detachment of the working device 2, the state of drive and stop of each component of the working device 2, the number of revolutions of the PTO shaft, and the inclination, and height of the working device 2 from the ground.

The position detector 24A, the first detector 25A, the state detector 28A, and the third detector 29A output, to the in-vehicle controller 21A as needed, detection information indicating the results detected at a predetermined cycle or a predetermined timing. The camera 26A, and the second detector 27A also output, to the in-vehicle controller 21A as needed, sensing information indicating the results sensed at a predetermined cycle or a predetermined timing. The in-vehicle controller 21A stores, in the internal memory 21A2, the detection information and the sensing information which have been input from the position detector 24A, the state detector 28A, the camera 26A, and the second detector 27A.

The in-vehicle controller 21A detects a preset alert condition from the detection information and the sensing information stored in the memory 21A2. The in-vehicle controller 21A detects, for example, the abnormality (failure) of the remote working machine 1 as an alert condition. When the value of the detection information and the sensing information satisfies a predetermined alert condition, such as when the value exceeds a predetermined threshold range, the in-vehicle controller 21A determines that there is an alert condition (alert event) in the remote working machine 1, and attaches alert information relating to the alert condition to the detection information and the sensing information.

In a case of remote operation, the in-vehicle controller 21A sequentially transmits the detection information and the sensing information stored in the internal memory 21A2 to the remote device 30 at a predetermined cycle or a predetermined timing by the second communicator 23A. For example, the in-vehicle controller 21A transmits, as correspondence data Q, the detection information and the sensing information in the memory 21A2 by the second communicator 23A, the correspondence data Q associating the detection information and the sensing information with the position information of the tractor 1A, the type of the tractor 1A, and the type of information.

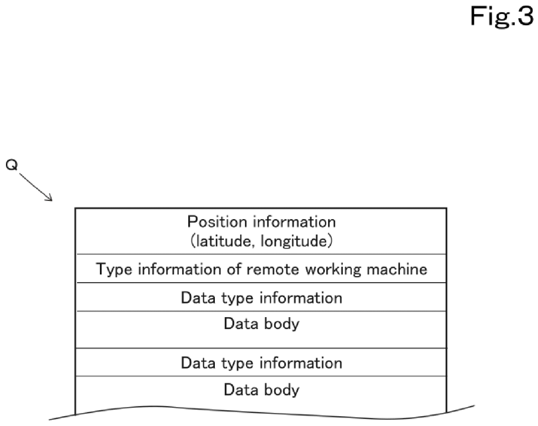

FIG. 3 is a table illustrating an example of the correspondence data Q. The remote working machine 1 (the tractor 1A) transmits the correspondence data Q to the remote device 30. The correspondence data Q includes the position information of the tractor 1A (the remote working machine 1), the type information of the remote working machine 1, data type information, and a data body which is the body of the detection information and the sensing information corresponding to the data type information. The position information of the tractor 1A is, for example, the position information (the latitude, and the longitude) detected by the position detector 24A. The type information of the remote working machine 1 is information indicating the type of a working machine, for example, identification information indicating a tractor 1A, a rice transplanter 1B, a combine 1C and the like. The data type information is identification information that identifies the type of the detection information and the sensing information. Note that the correspondence data Q includes at least one data type information and data body.

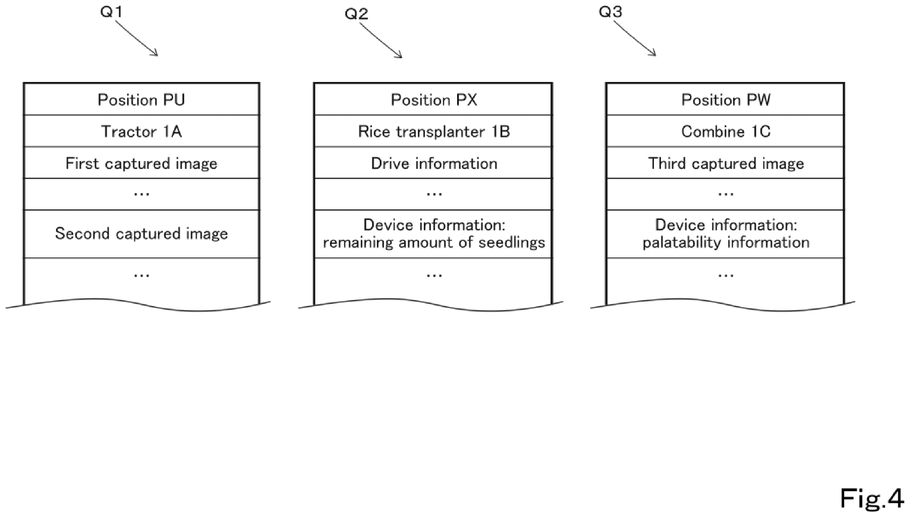

For example, the in-vehicle controller 21A sequentially transmits the correspondence data Q1 illustrated in FIG. 4 to the remote device 30. The correspondence data Q1 illustrated in FIG. 4 is data that associates the position information (for example, position PU) of the tractor 1A detected by the position detector 24A, the type information (for example, the "tractor 1A") of the remote working machine 1, data type information (an identifier "first captured image" indicating the first captured image 71A captured by the camera 26A1), the data body of the first captured image 71A, data type information (an identifier "second captured image" indicating the second captured image 72A captured by the camera 26A2), and the data body of the second captured image 72A.

The in-vehicle controller 21A communicates with a control unit 2a included in the working device 2 to cause the control unit 2a to control the operation of the working device 2. In other words, the in-vehicle controller 21A performs work on an agricultural field by controlling the operation of the working device 2 via the control unit 2a. For example, the control unit 2a includes a CPU, a memory and the like. Note that some working devices 2 may not include the control unit 2a. In this case, the in-vehicle controller 21A controls the position of the working device 2 by the connecting device 8, and performs work on an agricultural field by the working device 2.

The in-vehicle controller 21A controls the travel of the tractor 1A, the work performed by the working device 2, and other operations of the tractor 1A based on the detection information acquired from the first detector 25A, the second detector 27A, the state detector 28A, the third detector 29A and the like. When receiving a remote manipulation signal transmitted from the remote device 30 by the second communicator 23A, the in-vehicle controller 21A controls the travel of the tractor 1A, the work performed by the working device 2, and other operations of the tractor 1A based on the remote manipulation signal in addition to the above-mentioned information.

FIG. 2B is a side view of a rice transplanter 1B which is an example of the remote working machine 1. The rice transplanter 1B includes a machine body 3B. The machine body 3B is provided with a traveling device 7B. The traveling device 7B includes front wheels 7B1 and rear wheels 7B2 on both right and left sides of the machine body 3B, respectively, to support and allow the machine body 3B to travel. The traveling device 7B may be a crawler device.

As illustrated in FIG. 1B and FIG. 2B, the rice transplanter 1B includes a prime mover 4B, a transmission 5B, a brake system 13, a steering system 14B, and a seedling planter 40. The prime mover 4B is an engine (a diesel engine, a gasoline engine) or an electric motor. The transmission 5B changes the propelling force of the traveling device 7B, for example, by changing speed stages, and switches between forward travel and rearward travel of the traveling device 7B. The transmission 5B includes multiple gears to transmit power, a shifter to change connection between the gears, and a clutch to switch between transmission and disconnection of power, and changes speed stages by these components. The transmission 5B can switch the traveling mode between a state (4WD constant speed state) in which four wheels are driven (4WD), that is, the front wheels 7B1 and the rear wheels 7B2 are driven by power and the rotational speeds of the front wheels 7B1 and the rear wheels 7B2 are approximately the same, a state (4WD speed-up state) in which four-wheel drive is provided and the rotational speed of the front wheels 7B1 is faster than the rotational speed of the rear wheels 7B2, and two-wheel drive (2WD) in which only rear wheels 7B2 are driven. Note that in the present example embodiment, the transmission 5B allows a main transmission unit (for example, continuously variable transmission), and an auxiliary transmission unit (for example, stepped transmission) to change speed stages independently. The brake system 13B brakes the machine body 3B. The steering system 14A steers the machine body 3B.

A manipulator 11B to manually operate the rice transplanter 1B is provided around an operator's seat 10B. The rice transplanter 1B allows unmanned travel and operation. However, a user sitting on the operator's seat 10B can cause the rice transplanter 1B to travel and cause the seedling planter 40 to perform agricultural work by operating the manipulator 11B. The manipulator 11B includes a steering wheel, an accelerator pedal, a brake pedal, and a transmission lever.

The seedling planter 40 is provided at a rear portion of the machine body 3B. The seedling planter 40 includes a planting claw 41, and a seedling platform 42. The planting claw 41 is driven by the power transmitted by the transmission 5B. The rice transplanter 1B performs seedling planting work on an agricultural field by driving (operating) the planting claw 41. The seedling planter 40 includes a storage unit to store agricultural materials such as fertilizer, and a feeder to feed the agricultural materials stored in the storage unit. The feeder is driven by the power transmitted by the transmission 5B. The rice transplanter 1B performs spreading work (fertilizing work) on an agricultural field by driving (operating) the feeder.

As illustrated in FIG. 1B, the rice transplanter 1B includes an in-vehicle controller 21B, a storage (memory and/or storage) 22B, a second communicator (in-vehicle communicator) 23B, a position detector 24B, a first detector (inertial measurement unit) 25B, a camera 26B, a second detector (sensing device) 27B, a state detector 28B, and a third detector 29B. In the rice transplanter 1B, an in-vehicle network such as CAN, LIN, or FlexRay is constructed, and the in-vehicle controller 21B is electrically connected to the storage 22B, the second communicator 23B, the position detector 24B and the like.

The in-vehicle controller 21B is an electronic control unit (ECU) including a processor 21B1 and a memory 21B2. The in-vehicle controller 21B is a controller to control the operation of the components of the rice transplanter 1B. The memory 21B2 includes a volatile or non-volatile memory or the like. The in-vehicle controller 21B controls an actuator group including electric or hydraulic motors, cylinders, and control valves to actuate the components of the rice transplanter 1B, such as the prime mover 4B, the transmission 5B, the traveling device 7B, the brake system 13B, and the seedling planter 40. The memory 21B2 of the in-vehicle controller 21B stores, in a readable and writable manner, various information and data for the in-vehicle controller 21B to control the operation of the components of the rice transplanter 1B. The storage 22B is, for example, an SSD, an HDD and the like.

The in-vehicle controller 21A wirelessly communicates with the remote device 30 by the second communicator 23B. The position detector 24B detects the position of the rice transplanter 1B. The first detector 25B detects the position of the rice transplanter 1B, inclined to the right or left and the front or rear with respect to a horizontal state. The second communicator 23B, the position detector 24B, and the first detector 25B have the same functions as those of the second communicator 23A, the position detector 24A, and the first detector 25A in the tractor 1A, thus a detailed description will be omitted.

The camera 26B captures and senses (monitors) the surrounding area of the rice transplanter 1B. The camera 26B includes a CCD camera on which a CCD image sensor is mounted or a CMOS camera on which a CMOS image sensor is mounted. As illustrated in FIG. 2B, the camera 26B is installed at each of predetermined positions such as a front portion, a rear portion, right and left lateral portions of the rice transplanter 1B to capture image(s) of surrounding areas such as an area forward of, an area rearward of, and/or areas on the right and left sides of the rice transplanter 1B, and output data of the captured image.

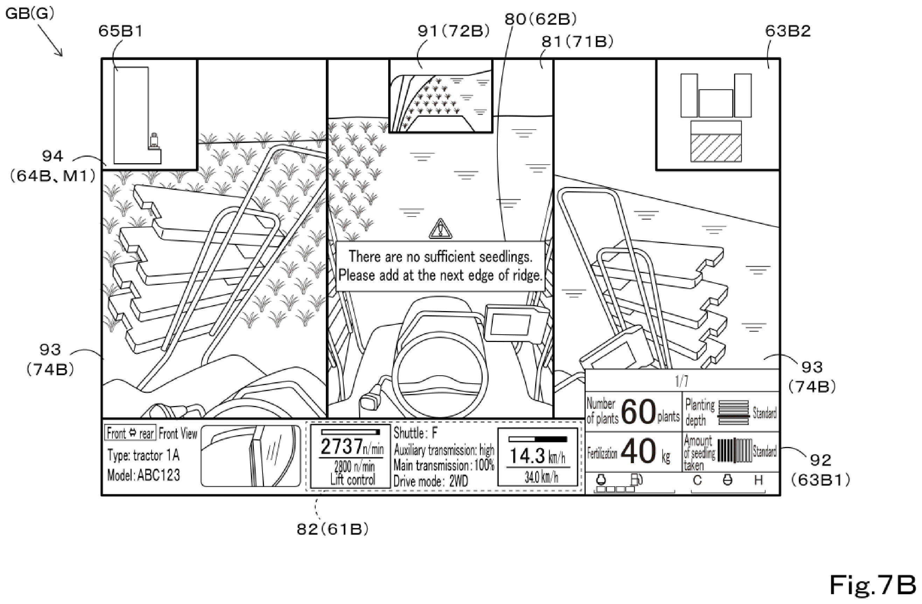

For example, as illustrated in FIG. 2B, a camera 26B1 captures an image of an area forward of the rice transplanter 1B from the operator's seat 10. More specifically, the camera 26B1 captures an image of an area forward (in the direction of travel, the arrow A1 direction) of the rice transplanter 1B in approximately the same field of view as that of a user sitting on the operator's seat 10B. That is, with the camera 26B1, a first captured image 71B (see FIG. 7B mentioned below) of an area in the direction of travel of the rice transplanter 1B is obtained.

As illustrated in FIG. 2B, a camera 26B2 installed at a rear portion of the machine body 3B of the rice transplanter 1B captures an image of an area rearward of the rice transplanter 1B. More specifically, the camera 26B2 captures an image of an area in the opposite direction (the arrow A2 direction) of the field of view of a user sitting on the operator's seat 10B. In other words, with the camera 26B2, a second captured image 72B (FIG. 7B) of an area in the direction opposite to the direction of travel of the rice transplanter 1B is obtained. With a camera 26B4 installed at each of the right and left lateral portions of the machine body 3B of the rice transplanter 1B, a fourth captured image 74B of a corresponding lateral side of the rice transplanter 1B is obtained. The camera 26B outputs the captured image to the in-vehicle controller 21B as sensing information.

The second detector 27B is a sensing device other than the camera 26B to sense (monitor) the surrounding area of the rice transplanter 1B. As with the first detector 25A in the tractor 1A, the second detector 27B detects the presence or absence of an object in the surrounding area of the rice transplanter 1B, and the distance to the object, and outputs sensing information indicating the results to the in-vehicle controller 21B. The in-vehicle controller 21B controls the traveling device 7B and the like according to the output signal of the second detector 27B to automatically stop the travel or work of the rice transplanter 1B, and avoids the contact with the object.

The state detector 28B detects the operating state (drive state) of the rice transplanter 1B. Specifically, the state detector 28B includes various sensors installed at corresponding positions of the rice transplanter 1B (the machine body 3B), and a computing unit so that the computing unit detects (calculates) the operating state of the rice transplanter 1B based on the output signals from the various sensors. The operating state of the rice transplanter 1B detected by the state detector 28B includes information relating to the drive system of the remote working machine 1 (the rice transplanter 1B), including at least one of the prime mover 4B or the traveling device 7B of the rice transplanter 1B. The information relating to the drive system includes the state of drive and stop of each component of the rice transplanter 1B, the direction of travel, the traveling speed (or acceleration) of the rice transplanter 1B, the number of revolutions of the prime mover 4B, and the transmission switch position of the transmission 5B.

The state detector 28B generates detection information indicating the detected operating state of the rice transplanter 1B, and outputs the detection information to the in-vehicle controller 21B. The detection information includes the information relating to the drive system of the rice transplanter 1B. For example, the information relating to the drive system of the state detector 28B includes information on at least one of the speed (or acceleration) of the rice transplanter 1B (the traveling device 7B), the number of revolutions of the prime mover 4B, or the transmission switch position of the transmission 5B.

The third detector 29B detects device information 63B relating to the seedling planter 40 of the rice transplanter 1B. The third detector 29B includes various sensors installed at corresponding positions of the seedling planter 40, and a computing unit so that the computing unit detects (calculates) the operating state of the working device 2 based on the output signals from the various sensors. The device information 63B of the seedling planter 40 detected by the third detector 29B includes the remaining amount of seedlings on the seedling platform 42, the remaining amount of agricultural materials (fertilizer) in the storage unit, the state of drive and stop of each component, planting density setting information (such as the number of plants per tsubo, and a distance between rows), fertilizer setting information, and setting information on the planting depth of the planting claw 41.

The position detector 24B, the first detector 25B, the state detector 28B, and the third detector 29B output, to the in-vehicle controller 21B as needed, detection information indicating the results detected at a predetermined cycle or a predetermined timing. The camera 26B, and the second detector 27B also output, to the in-vehicle controller 21B as needed, sensing information indicating the results sensed at a predetermined cycle or a predetermined timing. The in-vehicle controller 21B stores, in the internal memory 21B2, the detection information and the sensing information which have been input from the position detector 24B, the state detector 28B, the camera 26B, and the second detector 27B.

The in-vehicle controller 21B detects a preset alert condition from the detection information and the sensing information stored in the memory 21AB. The in-vehicle controller 21B detects, for example, the abnormality (failure) of the rice transplanter 1B as an alert condition. When the value of the detection information and the sensing information satisfies a predetermined alert condition, such as when the value exceeds a predetermined threshold range, the in-vehicle controller 21B determines that there is an alert condition (alert event) in the rice transplanter 1B, and attaches alert information to the detection information and the sensing information.

In a case of remote operation, the in-vehicle controller 21B sequentially transmits the detection information and the sensing information stored in the internal memory 21B2 to the remote device 30 at a predetermined cycle or a predetermined timing by the second communicator 23B. For example, the second communicator 23B of the rice transplanter 1B sequentially transmits correspondence data Q2 illustrated in FIG. 4 to the remote device 30.

The correspondence data Q2 illustrated in FIG. 4 is data that associates the position information (for example, position PX) of the rice transplanter 1B detected by the position detector 24B, the type information (for example, the "rice transplanter 1B") of the remote working machine 1, the data type information (for example, the "drive information" indicating the information relating to the drive system), the data body of the information on the drive system, the data type information (for example, "device information: the remaining amount of seedlings" indicating information relating to the remaining amount of seedlings on the seedling platform 42), and the data body of the device information 63B.

The in-vehicle controller 21B controls the travel of the rice transplanter 1B, the work performed by the seedling planter 40, and other operations of the rice transplanter 1B based on the detection information and the like acquired from the first detector 25B, the second detector 27B, the state detector 28B, and the third detector 29B. When receiving a remote manipulation signal transmitted from the remote device 30 by the second communicator 23B, the in-vehicle controller 21B controls the travel of the rice transplanter 1B, the work (seedling planting, and fertilization) performed by the seedling planter 40, and other operations of the rice transplanter 1B based on the remote manipulation signal in addition to the above-mentioned information.

FIG. 2C is a side view of the combine 1C which is an example of the remote working machine 1. The combine 1C includes a machine body 3C. The machine body 3C is provided with a traveling device 7C. The traveling device 7C is provided as a pair in a width direction to support and allow the machine body 3C to travel. The traveling device 7C is provided with crawler wheels. The traveling device 7C is a crawler device. However, the traveling device 7C may include tire front wheels and rear wheels instead of crawler wheels.

As illustrated in FIG. 1C and FIG. 2C, the combine 1C includes a prime mover 4C, a transmission 5C, a brake system 13, a steering system 14C, a mower 50, a thresher 51, a grain tank 52, and a discharger 53. The prime mover 4C is an engine (a diesel engine, a gasoline engine) or an electric motor. The transmission 5C changes the propelling force of the traveling device 7C, for example, by changing speed stages, and switches between forward travel and rearward travel of the traveling device 7C. The transmission 5C includes multiple gears to transmit power, a shifter to change connection between the gears, and a clutch to switch between transmission and disconnection of power, and changes speed stages by these components. Note that in the present example embodiment, the transmission 5C allows a main transmission unit (for example, continuously variable transmission), and an auxiliary transmission unit (for example, stepped transmission) to change speed stages independently. The brake system 13C brakes the machine body 3C. The steering system 14A steers the machine body 3C.

A manipulator 11C to manually operate the combine 1C is provided around an operator's seat 10C. The combine 1C allows unmanned travel and operation. However, a user sitting on the operator's seat 10C can cause the combine 1C to travel and cause the mower 50, the thresher 51, and the discharger 53 to perform agricultural work (harvest work) by operating the manipulator 11C. The manipulator 11C includes a steering wheel, an accelerator pedal, a brake pedal, and a transmission lever.

The mower 50 is a device to mow standing grain stalks on an agricultural field. The mower 50 is provided at a front portion of the machine body 3C in a width direction. The thresher 51 is a device to thresh the grain stalks mowed by the mower 50. The thresher 51 is provided at a rear portion of the machine body 3C.

The grain tank 52 is a tank to store the grains threshed by the thresher 51. The grain tank 52 is provided at a rear portion of the machine body 3C, and located adjacent to the thresher 51 in a width direction. The discharger 53 is a device to discharge the grains stored in the grain tank 52 to the outside.

As illustrated in FIG. 1C, the combine 1C includes an in-vehicle controller 21C, a storage (memory and/or storage) 22C, a second communicator (in-vehicle communicator) 23C, a position detector 24C, a first detector (inertial measurement unit) 25C, a camera 26C, a second detector (sensing device) 27C, a state detector 28C, and a third detector 29C. In the combine 1C, an in-vehicle network such as CAN, LIN, or FlexRay is constructed, and the in-vehicle controller 21C is electrically connected to the storage 22C, the second communicator 23C, the position detector 24C and the like.

The in-vehicle controller 21C is an electronic control unit (ECU) including a processor 21C1 and a memory 21C2. The in-vehicle controller 21C is a controller to control the operation of the components of the combine 1C. The memory 21C2 includes a volatile or non-volatile memory or the like. The in-vehicle controller 21C controls an actuator group including electric or hydraulic motors, cylinders, and control valves to actuate the components of the combine 1C, such as the prime mover 4C, the transmission 5C, the traveling device 7C, the brake system 13C, the mower 50, the thresher 51, and the discharger 53. The memory 21C2 of the in-vehicle controller 21C stores, in a readable and writable manner, various information and data for the in-vehicle controller 21C to control the operation of the components of the combine 1C. The storage 22C is, for example, an SSD, an HDD and the like.

The in-vehicle controller 21A wirelessly communicates with the remote device 30 by the second communicator 23C. The position detector 24C detects the position of the combine 1C. The first detector 25C detects the position of the combine 1C, inclined to the right or left and the front or rear with respect to a horizontal state. The second communicator 23C, the position detector 24C, and the first detector 25C have the same functions as those of the second communicator 23A, the position detector 24A, and the first detector 25A in the tractor 1A, thus a detailed description will be omitted.

The camera 26C captures and senses (monitors) the surrounding area of the combine 1C. The camera 26C includes a CCD camera on which a CCD image sensor is mounted or a CMOS camera on which a CMOS image sensor is mounted. As illustrated in FIG. 2C, the camera 26C is installed at each of predetermined positions such as a front portion, a rear portion, right and left lateral portions of the combine 1C to capture image(s) of surrounding areas such as an area forward of, an area rearward of, and/or areas on the right and left sides of the combine 1C, and output data of the captured image.

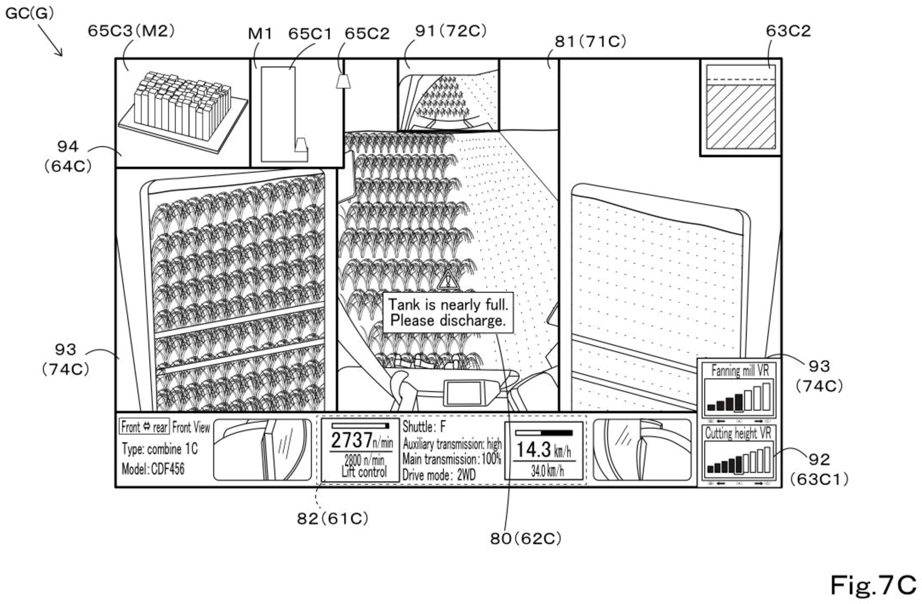

For example, as illustrated in FIG. 2C, a camera 26C1 captures an image of an area forward of the combine 1C from the operator's seat 10. More specifically, the camera 26C1 captures an image of an area forward (in the direction of travel, the arrow A1 direction) of the combine 1C in approximately the same field of view as that of a user sitting on the operator's seat 10C. That is, with the camera 26C1, a first captured image 71C (see FIG. 7C mentioned below) of an area in the direction of travel of the combine 1C is obtained.

As illustrated in FIG. 2C, the camera 26C3 captures an image of the mower 50 at a front portion of the machine body 3C. In other words, with the camera 26C2, a third captured image 73C (FIG. 7C) of an area in a direction different from the direction of travel of the combine 1C is obtained. With a camera 26C4 installed at each of the right and left lateral portions of the machine body 3C of the combine 1C, a fourth captured image 74C of a corresponding lateral side of the combine 1C is obtained. The camera 26B outputs the captured image to the in-vehicle controller 21B as sensing information. The camera 26C outputs the captured image to the in-vehicle controller 21C as sensing information.

The second detector 27C is a sensing device other than the camera 26C to sense (monitor) the surrounding area of the combine 1C. As with the first detector 25A in the tractor 1A, the second detector 27C detects the presence or absence of an object in the surrounding area of the combine 1C, and the distance to the object, and outputs sensing information indicating the results to the in-vehicle controller 21C. The in-vehicle controller 21C controls the traveling device 7C and the like according to the output signal of the second detector 27C to automatically stop the travel or work of the combine 1C, and avoids the contact with the object.

The state detector 28C detects the operating state (drive state) of the combine 1C. Specifically, the state detector 28C includes various sensors installed at corresponding positions of the combine 1C (the machine body 3C), and a computing unit so that the computing unit detects (calculates) the operating state of the combine 1C based on the output signals from the various sensors. The operating state of the combine 1C detected by the state detector 28C includes information relating to the drive system of the remote working machine 1 (the combine 1C), including at least one of the prime mover 4C or the traveling device 7C of the combine 1C. The information relating to the drive system includes the state of drive and stop of each component of the combine 1C, the direction of travel, the traveling speed (or acceleration) of the combine 1C, the number of revolutions of the prime mover 4C, and the transmission switch position of the transmission 5C.

The state detector 28C generates detection information indicating the detected operating state of the combine 1C, and outputs the detection information to the in-vehicle controller 21C. The detection information includes the information relating to the drive system of the combine 1C. For example, the information relating to the drive system of the state detector 28C includes information on at least one of the speed (or acceleration) of a rice transplanter 1C (the traveling device 7C), the number of revolutions of the prime mover 4C, or the transmission switch position of the transmission 5C.

The third detector 29C detects the state of a device relating to mowing work and the state of harvested grains. The third detector 29C includes various sensors installed at corresponding positions of the mower 50, the thresher 51, and the grain tank 52, and a computing unit so that the computing unit detects (calculates) the operating state of the mower 50 and the thresher 51, and the state of the grains stored in the grain tank 52 based on the output signals from the various sensors.

Device information 63C detected by the third detector 29C includes the state of drive and stop of each component, the cutting height of the mower 50, the air volume of a fanning mill (fan for wind separation), the remaining capacity of the grain tank 52, and the moisture content and protein amount in the grains stored in the grain tank 52. Specifically, the third detector 29C detects the cutting height of standing grain stalks based on the detection signals from a sensor installed in the mower 50. The third detector 29C is provided in the thresher 51 to detect the air volume of a fanning mill based on the detection signals from a sensor installed at the fanning mill to blow away straw pieces in a threshing process. The third detector 29C detects the capacity of the grains stored in the grain tank 52 based on the detection signals from a yield sensor provided in the grain tank 52. For example, the yield sensor is a load cell to measure a weight.

The third detector 29C is located inside or around the grain tank 52 to detect the state of harvested grains based on the detection signals from a measuring device that can measure the characteristics of the grains. Specifically, the measuring device includes a moisture content measurer to measure the moisture content contained in the grains, and a palatability (eating quality) measurer to measure the protein amount in the grains. The palatability measurer emits near-infrared rays (near-infrared light) to the grains to be stored in the grain tank 52, analyzes an absorption spectrum based on spectroscopic analysis of transmitted light, and determines, based on the results of the analysis, the ingredient amount (protein content percentage) of the protein or the like contained in the grains, that is, the protein amount. The moisture content measurer is a sensor or the like to measure the moisture content of the grains using the dielectric constant of the grains, or measure the moisture content (moisture content percentage) of the grains using the electrical resistance of the grains, or measure the moisture content by emitting infrared rays or microwaves to the grains. Note that it is only necessary for the measuring device to measure the protein amount and moisture content of the grains, and the measuring method is not limited to the above-mentioned method.

The position detector 24C, the first detector 25C, the state detector 28C, and the third detector 29C output, to the in-vehicle controller 21C as needed, detection information indicating the results detected at a predetermined cycle or a predetermined timing. The camera 26C, and the second detector 27C also output, to the in-vehicle controller 21C as needed, sensing information indicating the results sensed at a predetermined cycle or a predetermined timing. The in-vehicle controller 21C stores, in the internal memory 21C2, the detection information and the sensing information which have been input from the position detector 24C, the state detector 28C, the camera 26C, and the second detector 27C.

The in-vehicle controller 21C detects a preset alert condition from the detection information and the sensing information stored in the memory 21C2. The in-vehicle controller 21C detects, for example, the abnormality (failure) of the remote working machine 1 as an alert condition. When the value of the detection information and the sensing information satisfies a predetermined alert condition, such as when the value exceeds a predetermined threshold range, the in-vehicle controller 21C determines that there is an alert condition (alert event) in the remote working machine 1, and attaches alert information relating to the alert condition to the detection information and the sensing information.

In a case of remote operation, the in-vehicle controller 21C sequentially transmits the detection information and the sensing information stored in the internal memory 21C2 to the remote device 30 at a predetermined cycle or a predetermined timing by the second communicator 23C. For example, the second communicator 23C of the combine 1C sequentially transmits correspondence data Q3 illustrated in FIG. 4 to the remote device 30.

The correspondence data Q3 illustrated in FIG. 4 is data that associates the position information (for example, position PW) of the combine 1C detected by the position detector 24C, the type information (for example, the "combine 1C") of the remote working machine 1, data type information (an identifier "third captured image" indicating the third captured image 73C captured by the camera 26C3), the data body of the third captured image 73C, data type information (for example, "palatability information" indicating information relating to the state of the protein amount and moisture content of grains), and the data body of the device information 63C.

The in-vehicle controller 21C controls the travel of the combine 1C, the work performed by the seedling planter 40, and other operations of the combine 1C based on the detection information acquired from the first detector 25C, the second detector 27C, the state detector 28C, the third detector 29C and the like. When receiving a remote manipulation signal transmitted from the remote device 30 by the second communicator 23C, the in-vehicle controller 21C controls the travel of the combine 1C, the work (seedling planting, and fertilization) performed by the seedling planter 40, and other operations of the combine 1C based on the remote manipulation signal in addition to the above-mentioned information.

Next, the remote device 30 will be described. As illustrated in FIG. 1, the remote device 30 is located at a position away from the remote working machine 1 (the tractor 1A, the rice transplanter 1B, and the combine 1C). With the remote device 30, the remote working machine 1 can be remotely manipulated by a human remote manipulator (remote user, human operator)'s manipulation, and the state of the remote working machine 1, the situation of surrounding area of the remote working machine 1 and the like can be monitored. The remote device 30 includes a controller 31, a storage (memory and/or storage) 32, the first communicator 33, a display 34, a remote manipulator 35, and an input device 36.

The controller 31 is a processor to control the operation of the components of the remote device 30. The processor functions as the controller 31 which controls the operation of the components of the remote device 30, for example, by executing a remote control program, an application or the like stored in the storage 32. The controller 31 may be implemented by hardware in an integrated circuit (IC chip), or may be implemented by software using a computer. In the latter case, the computer includes: a recording medium in which a program as software implementing the functions of the controller 31 and various data relating to the remote working machine 1 are recorded in a computer-readable manner; an arithmetic circuit such as a central processing unit (CPU) that executes the commands in the program; and a random access memory (RAM) for loading the program and various data, etc. The functions of the controller 31 are implemented by the arithmetic circuit reading the program from the recording medium and executing the program.

An internal memory 31a provided in the controller 31 is a volatile or non-volatile memory. The internal memory 31a stores, in a readable and writable manner, various information and data for controlling the operation of the components of the remote device 30 by the controller 31.

A display controller 31b provided in the controller 31 has a function of controlling a remote manipulation screen G to be displayed on the display 34. For example, the display controller 31b causes the display 34 to display the remote manipulation screen G (such as FIG. 4A) showing information relating to remote manipulation.

The storage 32 pre-stores an application such as a remote control program for remotely operating the remote working machine 1, a remote monitoring program for remotely monitoring the remote working machine 1, and various data. The storage 32 is, for example, an SSD, an HDD and the like. The storage 32 stores information (agricultural field information) on an agricultural field where the remote working machine 1 performs agricultural work, and machine information relating to the tractor 1A, the rice transplanter 1B, and the combine 1C.

The agricultural field information includes information indicating the identification information, position, and area of agricultural field, and an agricultural field map M1. The agricultural field information is defined in association with each agricultural field. The agricultural field information is map information that indicates the agricultural field map M1, the outline of each agricultural field, and position information of various areas and the like set in the agricultural field.

The first communicator 33 includes an antenna, an IC, and an electric circuit to perform wireless communication via a mobile-phone communication network, the Internet or a wireless LAN. The first communicator 33 can wirelessly communicate with the remote working machine(s) 1 under the control of the controller 31. The first communicator 33 receives various data (such as the detection information from the position detector 24, the first detector 25, the state detector 28, and the third detector 29, and the sensing information from the second detector 27) transmitted from the second communicator 23. For example, the first communicator 33 receives the correspondence data Q (FIG. 3).

The display 34 is, for example, a liquid crystal display, an organic EL display or the like. The display 34 displays various information for remotely operating the remote working machine 1. For example, the display 34 displays the remote manipulation screen G showing information relating to remote operation, based on instruction signals of the display controller 31b. The details of the remote manipulation screen G will be described below.

The input device 36 is an interface for operating the remote device 30. A remote user can input a predetermined instruction to the remote device 30 by operating the input device 36. The input device 36 includes: a sensor to detect an operation amount, an operation speed, an operation direction and the like; and a driver to calculate (define) an instruction signal to the remote device 30 according to detection results from the sensor. The driver is a program stored in the storage 32. When a remote user operates the input device 36, the sensor of the input device 36 detects an operation amount and the like, and inputs the operation amount to the driver of the input device 36. The driver of the input device 36 defines an instruction signal according to detection results from the sensor. When defining an instruction signal, the input device 36 inputs the instruction signal to the controller 31. The controller 31 controls the remote device 30 based on the instruction signal input by the input device 36. Note that as the input device 36, a touch panel provided in the display 34 may be used to allow a touch operation for the display 34 to be detected, or a hardware switch may be used.

The remote manipulator 35 is a device to remotely manipulate the remote working machine 1. The remote manipulator 35 includes a steering handle 35a, an accelerator pedal 35b, a brake pedal 35c and a transmission lever 35d, and these are located around a remote user's seat. The remote manipulator 35 receives remote user's operations. A remote user sits on the remote user's seat to operate the remote manipulator 35, thus remotely operates (manipulates, controls) the travel of the remote working machine 1 or the work performed by the working device 2 via the first communicator 33. A remote user monitors the remote working machine 1 and the situation of surrounding area by the display 34. The remote user can input predetermined information or instructions to the remote device 30 by operating the remote manipulator 35. Note that the remote manipulator 35 may be a touchpad or a hardware switch or the like.

Note that as illustrated in FIG. 1A, the remote device 30 may include a display terminal 70 and the remote manipulator 35. Specifically, the display terminal 70 may be a terminal including the controller 31, the storage 32, the first communicator 33, the display 34, and the input device 36. As the display terminal 70, for example, a tablet device or a portable terminal device such as a smartphone, or a desktop computer installed in a base station may be mentioned.

When a remote user inputs an operation instruction to the remote working machine 1 by operating the remote manipulator 35, the controller 31 generates a remote manipulation signal corresponding to the operation instruction, and transmits the remote manipulation signal to the remote working machine 1 by the first communicator 33. In other words, a remote manipulation signal according to an operation of the steering handle 35a, the accelerator pedal 35b, the brake pedal 35c and the transmission lever 35d is transmitted to the remote working machine 1. When receiving a remote manipulation signal from the remote device 30 by the second communicator 23, the in-vehicle controller 21 of the remote working machine 1 controls the travel and steering of the remote working machine 1, and controls the working operation of the working device 2 by operating the components of the remote working machine 1 based on the remote manipulation signal, the detection information from the position detector 24, the sensing information from the second detector 27, and the detection information from the state detector 28.

The in-vehicle controller 21 periodically transmits the detection information from the position detector 24, the first detector 25, the state detector 28, and the third detector 29, and the sensing information from the second detector 27 to the remote device 30 by the second communicator 23. When receiving the detection information and the sensing information by the first communicator 33, the controller 31 of the remote device 30 stores the information in the internal memory 31a and/or displays the information on the display 34. Thus, a remote user can remotely manipulate the remote working machine 1 and monitor the surrounding area of the remote working machine 1.

The controller 31 of the remote device 30 causes the remote manipulation screen G showing information relating to remote manipulation to be displayed on the display 34. For example, the display 34 displays the remote manipulation screen G based on the instruction signal from the display controller 31b. Specifically, the display controller 31b converts the information relating to the remote manipulation into display information (image) displayable on the display 34. The display controller 31b outputs, to the display 34 as an instruction signal, the converted display information and the position (area) where the display information is displayed, and causes the remote manipulation screen G to be displayed on the display 34.

The display 34 causes at least one of (i) the display information to be displayed on the remote manipulation screen G or (ii) the display form of the display information (the form in which the display information is displayed) to differ depending on the type of the remote working machine 1.

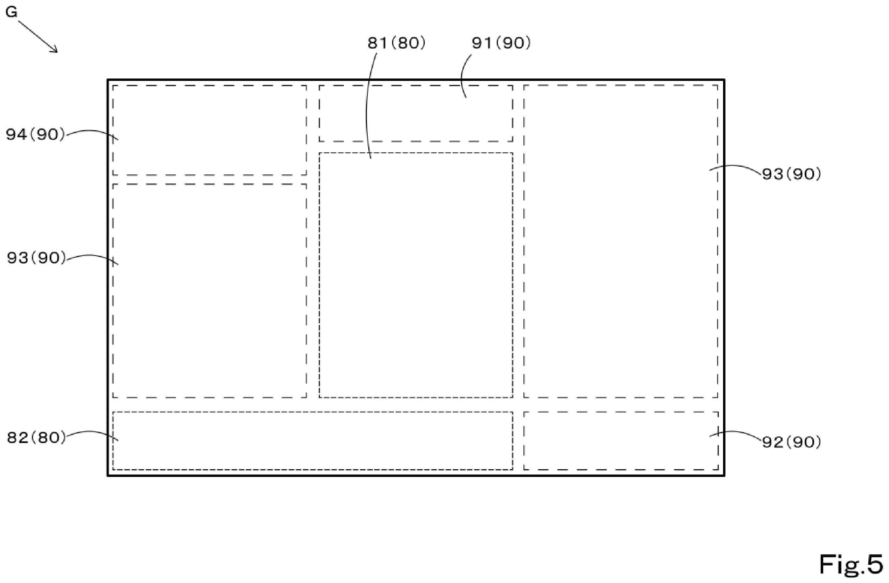

FIG. 5 is a table illustrating an example of a display area on the remote manipulation screen G. The remote manipulation screen G includes a main display area 80 in which the display information and the display form of the display information are common to (shared by, the same between) the types of the remote working machines 1, and a sub-display area 90 in which at least one of the display information or the display form of the display information differs depending on the type of the remote working machine 1. The sub-display area 90 is adjacent to the main display area 80 and is around the main display area 80. The main display area 80 includes a first main area 81 and a second main area 82. The first main area 81 and the second main area 82 are arranged in an up-down direction. The sub-display area 90 includes a first sub-area 91, a second sub-area 92, a third sub-area 93, and a fourth sub-area 94. The storage 32 pre-stores layout data that defines the layout of the main display area 80 and the sub-display area 90 on the remote manipulation screen G. The layout data includes, for example, the coordinate values indicating the position of each area on the remote manipulation screen G, and the values of the width and height showing the shape of the area. Thus, using this layout data, the display controller 31b sets the main display area 80 and the sub-display area 90 on the remote manipulation screen G, sets the first main area 81 and the second main area 82 in the main display area 80, and sets the first sub-area 91, the second sub-area 92, the third sub-area 93, and the fourth sub-area 94 in the sub-display area 90.

The display controller 31b causes the first captured image(s) 71A to 71C to be displayed in the main display area 80. The first captured images 71A to 71C are captured images each of which is an image of an area in a direction common to the types of remote working machines 1, and show an area in the direction of travel of the remote working machines 1. The display controller 31b causes drive information 61A to 61C of the remote working machines 1 and alert information 62A to 62C of the remote working machines 1 to be displayed in the main display area 80. The drive information 61A to 61C and alert information 62A to 62C are common to the types of remote working machines 1. The display controller 31b causes captured images (the second captured images 72A, 72B, and the third captured image 73C) to be displayed in the sub-display area 90. The captured images are each an image of an area in a direction that differs depending on the type of the remote working machine 1. The display controller 31b causes device information 63 to be displayed in a different display form. The device information 63 relates to the working device 2 (the seedling planter 40, the mower 50, the thresher 51, and the grain tank 52) which differs depending on the type of the remote working machine 1.

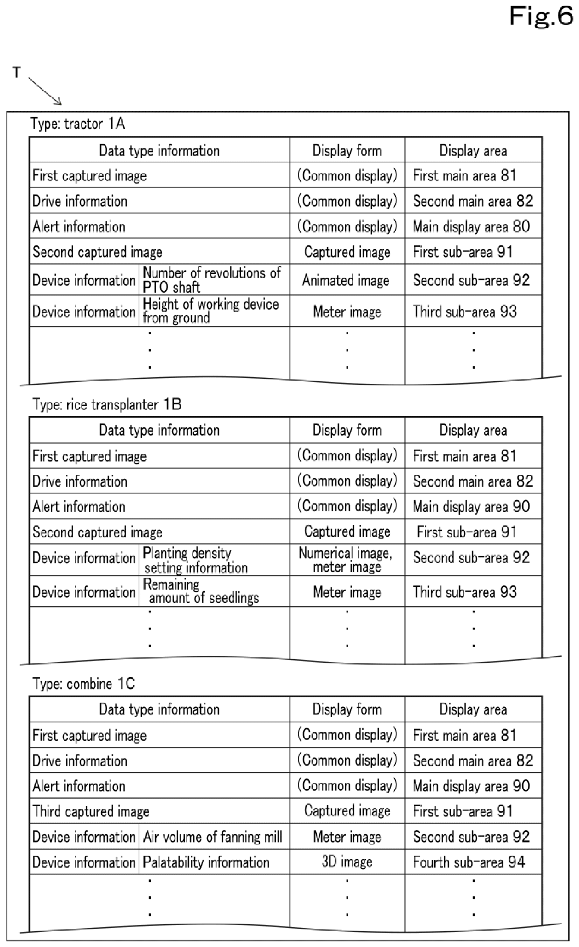

Specifically, the display controller 31b determines in which area and in which display form the detection information and the sensing information received from the remote working machine 1 are displayed on the remote manipulation screen G based on the type information and the data identification information of the remote working machine 1 which are held in the transmitted information. The display controller 31b changes at least one of the display information to be displayed on the remote manipulation screen G or the display form of the display information based on a correspondence table T (FIG. 6) stored in the storage 32. FIG. 6 is a table illustrating an example of the correspondence table T. The correspondence table T is data defined for each type of the remote working machine 1 in association with data type information indicating the type of information relating to remote operation, the display form of the display information, and the display area to be displayed on the remote manipulation screen G.

For example, as illustrated in FIG. 6, when determining that the type of the remote working machine 1 is the tractor 1A, the display controller 31b determines that for the data type information of first captured image, drive information, and alert information, the corresponding display form is a common display, and the display area is the first main area 81, the second main area 82, or the main display area 80, respectively. When the data type information is second captured image information, the display controller 31b determines that the corresponding display form is a captured image, and the display area is the first sub-area 91. When the data type information is device information (the number of revolutions of the PTO shaft), the display controller 31b determines that the corresponding display form is animation of images, and the display area is the second sub-area 92. When the data type information is device information (height of the working device from the ground), the display controller 31b determines that the corresponding display form is a meter image, and the display area is the third sub-area 93.

Next, when determining that the type of the remote working machine 1 is the rice transplanter 1B, the display controller 31b determines in the same manner as mentioned above for the data type information of first captured image, drive information, alert information, and second captured image information. When the data type information is device information (planting density setting information), the display controller 31b determines that the corresponding display form is a numerical image or a meter image, and the display area is the second sub-area 92. When the data type information is device information (the remaining amount of seedlings), the display controller 31b determines that the corresponding display form is a meter image, and the display area is the third sub-area 93.

Next, when determining that the type of the remote working machine 1 is the combine 1C, the display controller 31b determines in the same manner as mentioned above for the data type information of first captured image, drive information, and alert information. When the data type information is third captured image information, the display controller 31b determines that the corresponding display form is a captured image, and the display area is the first sub-area 91. When the data type information is device information (air volume of a fanning mill), the display controller 31b determines that the corresponding display form is a meter image, and the display area is the second sub-area 92. When the data type information is device information (palatability information), the display controller 31b determines that the corresponding display form is a 3D image, and the display area is the fourth sub-area 94.

When receiving the correspondence data Q from the remote working machine 1, the remote device 30 displays the detection information and the sensing information (data body) on the display 34 based on the identification information of the remote working machine 1 and the identification information of the data.

For example, when receiving the correspondence data Q by the second communicator 23, the display controller 31b refers to the correspondence table T, and obtains the display form of the display information and the display area which correspond to the type information of the remote working machine 1 and the data type information in the correspondence data Q. The display controller 31b converts the information (the data body of the correspondence data Q) relating to remote operation into predetermined display information. When converting into the display information, the display controller 31b causes the display information to be displayed in a predetermined display area defined in the correspondence table T.

FIG. 7A is a view illustrating an example of a remote manipulation screen GA when the tractor 1A is remotely manipulated. When receiving the correspondence data Q1 including the type information of the tractor 1A, the display controller 31b causes the remote manipulation screen GA to be displayed on the display 34.

FIG. 7B is a view illustrating an example of a remote manipulation screen GB when the rice transplanter 1B is remotely manipulated. When receiving the correspondence data Q2 including the type information of the rice transplanter 1B, the display controller 31b causes the remote manipulation screen GB to be displayed on the display 34.

FIG. 7C is a view illustrating an example of a remote manipulation screen GC when the combine 1C is remotely manipulated. When receiving the correspondence data Q3 including the type information of the combine 1C, the display controller 31b causes the remote manipulation screen GC to be displayed on the display 34.

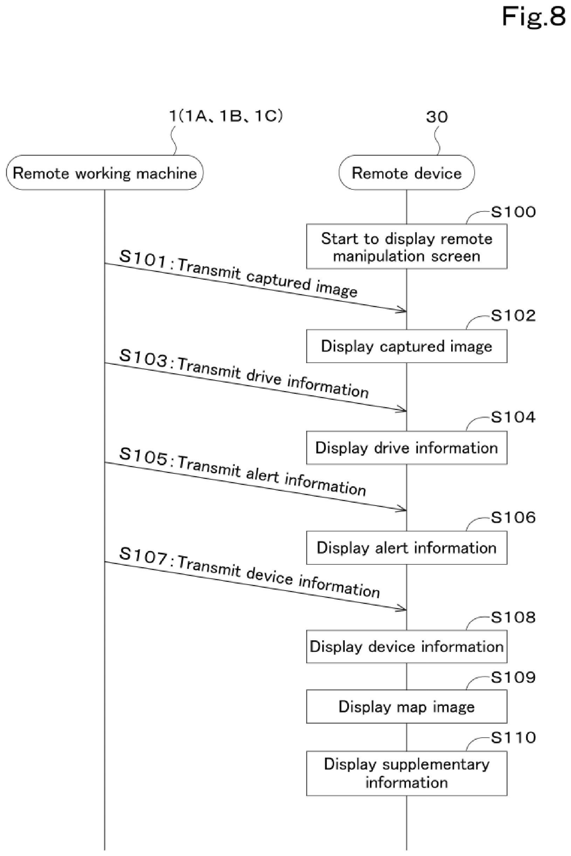

FIG. 8 is a flowchart illustrating a procedure for displaying the remote manipulation screen GA. The steps of the flowchart shown on the left side of FIG. 8 are performed by the in-vehicle controller 21A based on a software program stored in the storage 22A. The steps of the flowchart shown on the right side of FIG. 8 are performed by the display controller 31b of the remote device 30 based on a software program stored in the storage 32.

When the remote device 30 is started, and the input device 36 receives an instruction input to the tractor 1A for performing remote manipulation, the controller 31 starts to control the remote manipulation of the tractor 1A. As illustrated in FIG. 8, when the controller 31 of the remote device 30 starts to control the remote manipulation of the tractor 1A, the display controller 31b of the remote device 30 starts a process of displaying the remote manipulation screen GA on the display 34 (S100).

The in-vehicle controller 21A of the tractor 1A (the remote working machine 1) transmits the correspondence data Q including the images captured by the camera 26A to the remote device 30 from the tractor 1A by the second communicator 23A (S101).

When the first communicator 33 of the remote device 30 receives the correspondence data Q, the display controller 31b causes the captured images to be displayed in a predetermined area on the remote manipulation screen GA of the display 34 based on the type information of the remote working machine 1 and the data type information in the received correspondence data Q, and the correspondence table T (S102). The details of the areas for displaying captured images by the display controller 31b will be described below.

In addition, the in-vehicle controller 21A transmits the correspondence data Q including the drive information 61A of the tractor 1A to the remote device 30 by the second communicator 23A (S103).

When the first communicator 33 of the remote device 30 receives the correspondence data Q, the display controller 31b causes the drive information 61A to be displayed in the second main area 82 on the remote manipulation screen GA of the display 34 based on the type information of the remote working machine 1 and the data type information in the received correspondence data Q, and the correspondence table T (S104).

The in-vehicle controller 21A transmits the correspondence data Q including the alert information 62A of the tractor 1A to the remote device 30 by the second communicator 23 (S105).

When the first communicator 33 of the remote device 30 receives the correspondence data Q, the display controller 31b causes the alert information 62A to be displayed in the second main area 82 on the remote manipulation screen GA of the display 34 based on the type information of the remote working machine 1 and the data type information in the received correspondence data Q, and the correspondence table T (S106).

The in-vehicle controller 21A transmits the correspondence data Q including the device information 63A of the tractor 1A to the remote device 30 by the second communicator 23 (S107).

When the first communicator 33 of the remote device 30 receives the correspondence data Q, the display controller 31b causes the device information 63A to be displayed in the sub-display area 90 on the remote manipulation screen GA of the display 34 based on the type information of the remote working machine 1 and the data type information in the received correspondence data Q, and the correspondence table T (S108).

The display controller 31b causes a map image 64A to be displayed in the fourth sub-area 94 on the remote manipulation screen GA of the display 34, the map image 64A associating the position information of the tractor 1A with the agricultural field map M1, the position information being included in the correspondence data Q received in steps S101, S103, S105, S107 (S109). When the display area of the device information 63A received in step S107 is the fourth sub-area 94, the display controller 31b converts the device information 64A into display information (image) as supplementary information 65A, and causes the display information to be displayed on the map image 64A (S110).

Also, in a case of the rice transplanter 1B and the combine 1C, when receiving a predetermined instruction input by the input device 36, the remote device 30 starts remote control of the rice transplanter 1B or the combine 1C, and the display controller 31b starts to display the remote manipulation screen GB or GC illustrated in FIG. 7B or FIG. 7C. The display controller 31b receives the correspondence data Q from the rice transplanter 1B or the combine 1C, and causes information relating to remote manipulation to be displayed on the display 34 as the remote manipulation screen GB or GC. That is, the display control flow performed by the display controller 31b of the remote device 30 is the same between when the target of remote manipulation is the tractor 1A and when the target of remote manipulation is the rice transplanter 1B or the combine 1C, thus the details will be omitted.

The remote working machine 1 sequentially performs transmission of the correspondence data Q to the remote device 30 in steps S101, S103, S105, and S107. Each time receiving the correspondence data Q, the display controller 31b sequentially performs the process relating to display in steps S102, S104, S106, and S108 to S110. Note that the remote device 30 may store the received correspondence data Q once in the internal memory 31a, and collectively perform the display processes at a predetermined cycle for the correspondence data Q stored in the internal memory 31a.

Subsequently, the captured images (the first captured images 71A to 71C, the second captured images 72A, 72B, and the third captured image 73C) to be displayed by the display controller 31b will be described for each display area using FIG. 7A to FIG. 7C.

The display controller 31b causes the first captured images 71A to 71C of an area in the direction of travel to be displayed in the first main area 81 regardless of the type of the remote working machine 1. As illustrated in FIG. 7A to FIG. 7C, the display controller 31b causes the corresponding first captured images 71A to 71C to be displayed in the first main area 81 on the remote manipulation screens GA to GC.

The display controller 31b causes a captured image to be displayed in the first sub-area 91. The captured image shows an area in a direction that differs depending on the type of the remote working machine 1. In the following description, at least one of the tractor 1A or the rice transplanter 1B may be referred to as a first working machine, and the combine 1C may be referred to as a second working machine.

As illustrated in FIG. 7A and FIG. 7B, the display controller 31b causes the second captured image 72A or 72B of an area in the direction opposite to the direction of travel of the remote working machine 1 to be displayed in the first sub-area 91 on the remote manipulation screen GA or GB of the first working machine (the tractor 1A or the rice transplanter 1B). As illustrated in FIG. 7C, the display controller 31b causes the third captured image 73C of the mower 50 at a front portion of the machine body 3C to be displayed in the first sub-area 91 on the remote manipulation screen GC of the second working machine (the combine 1C). The second captured images 72A and 72B, and the third captured image 73C are captured images of areas in different directions.

As illustrated in FIG. 7A to FIG. 7C, the display controller 31b causes the drive information 61A to 61C included in the remote working machine 1 and indicating the information relating to the drive system of the remote working machine 1 to be displayed in the second main area 82 of the main display area 80. On the remote manipulation screens GA to GC, the drive information 61A to 61C are displayed in the second main area 82, the drive information 61A to 61C including the traveling speeds, the number of revolutions of the prime movers 4A to 4C, and the transmission switch positions of the transmissions 5A to 5C of respective remote working machines 1 (the traveling devices 7A to 7C) corresponding to the types of the remote working machine 1.

Note that when there is an alert condition in the remote working machine 1, the display controller 31b causes the alert information 62A to 62C relating to the alert condition to be displayed in the main display area 80 of the remote manipulation screen G. Specifically, when the alert information 62A to 62C is attached to the correspondence data Q from the remote working machine 1, the display controller 31b causes the alert information 62A to 62C to be displayed on the first main area 81 or the second main area 82 such that the alert information 62A to 62C is superimposed on at least one of the first main area 81 or the second main area 82. For example, as illustrated in FIG. 7A to FIG. 7C, each of the alert information 62A to 62C is displayed in the second main area 82 of a corresponding one of the remote manipulation screens GA to GC.

The display controller 31b causes the device information 63 to be displayed in the second sub-area 92 or the third sub-area 93 depending on the type of the remote working machine 1. As described above, the device information 63 is information relating to the device that performs the agricultural work detected by the third detectors 29A to 29C, and the information varies depending on the type of the remote working machine 1.

The device information 63A1 and the device information 63A2 are each information relating to the working device 2 attached to the tractor 1A. For example, the device information 63A1 includes information on the number of revolutions of the PTO shaft to operate the working device 2. The device information 63A2 includes information indicating the height of the working device 2 from the ground. As illustrated in FIG. 7A, the display controller 31b causes the device information 63A1 to be displayed in the second sub-area 92 on the remote manipulation screen GA. The display controller 31b causes the device information 63A2 to be displayed in the third sub-area 93. The device information 63A2 is displayed on the fourth captured image 74A of a lateral side of the tractor 1A.

The device information 63B1 and the device information 63B2 are each information relating to the seedling planter 40. For example, the device information 63B1 includes information on the seedling planter 40, such as planting density setting information, fertilization setting information, and setting information on the planting depth of the planting claw 41. The device information 63B12 includes the remaining amount of seedlings on the seedling platform 42. As illustrated in FIG. 7B, the display controller 31b causes the device information 63B1 to be displayed in the second sub-area 92 on the remote manipulation screen GB. The display controller 31b causes the device information 63B2 to be displayed in the third sub-area 93. The device information 63B2 is displayed on the fourth captured image 74B of a lateral side of the rice transplanter 1B.

The device information 63C1 and the device information 63C2 are each information relating to the mower 50, the thresher 51, the grain tank 52, and the grains stored in the grain tank 52. For example, the device information 63C1 includes information on the cutting height of the mower 50, and information on the wind power of a fanning mill of the thresher 51. The device information 63C2 includes information on the remaining capacity of the grain tank 52. As illustrated in FIG. 7B, the display controller 31b causes the device information 63C1 to be displayed in the second sub-area 92 on the remote manipulation screen GC. The display controller 31b causes the device information 63C2 to be displayed in the third sub-area 93. The device information 63C2 is displayed on the fourth captured image 74B of a lateral side of the rice transplanter 1B.

The display controller 31b causes the map image 64A to 64C indicating the position of the remote working machine 1 to be displayed as a piece of information relating to remote manipulation in the fourth sub-area 94 of the sub-display area 90.

The map images 64A to 64C include the agricultural field map M1 stored in the storage 32, and the position information of the current remote working machine 1. The display controller 31b converts the agricultural field map M1 and the position information of the current remote working machine 1 into the map images 64A to 64C depending on the type of the remote working machine 1. The display controller 31b causes supplementary information 65A to 65C to be displayed on the map images 64A to 64C, the supplementary information 65A to 65C being different depending on the type of the remote working machine 1. The supplementary information 65A to 65C is guidance to assist with work performed by the remote working machine 1 according to the content of the work. The supplementary information 65A to 65C includes a recorded travel path on which the remote working machine 1 has traveled on an agricultural field, a subsequent scheduled travel path, information included in the device information 63A to 63C, and information relating to agricultural work, stored in the storage 32.

The supplementary information 65A includes a recorded work path 65A1 and a scheduled travel path 65A2 of the tractor 1A in the agricultural field map M1. The display controller 31b causes the map image 64A and the supplementary information 65A to be displayed as the remote manipulation screen GA in the fourth sub-area 94.

The supplementary information 65B includes a recorded work path 65B1 of the rice transplanter 1B in the agricultural field map M1. The display controller 31b causes the map image 64B and the supplementary information 65B to be displayed as the remote manipulation screen GB in the fourth sub-area 94.

The supplementary information 65C includes a recorded work path 65C1 of the combine 1C, transport vehicle position information 65C2 of a transport vehicle that transports the grains harvested by the combine 1C, and a palatability map M2 in the agricultural field map M1. The palatability map M2 is map information that associates palatability information on the grains stored in the grain tank 52, detected by the third detector 29C, with information on the position at which the palatability information is detected. The display controller 31b causes the map image 64C and the supplementary information 65C to be displayed as the remote manipulation screen GC in the fourth sub-area 94.

Note that in the above-described example embodiment, the display controller 31b of the remote device 30 refers to the correspondence table T in the storage 32, and determines the display form and the display area (display position) on the remote manipulation screen G for each piece of information; however, the remote working machine 1 may transmit correspondence data Q including information (that is, information relating to display) specifying the display position in the remote manipulation screen G. Specifically, the storages 22A to 22C of the remote working machine 1 store the correspondence table T for the type of the remote working machine 1. The in-vehicle controller 21 transmits, to the remote device 30, correspondence data Q in which information relating to display on the remote manipulation screen G is attached to the data body of the detection information and the sensing information based on the correspondence table T. The display controller 31b of the remote device 30 converts the data body to display information and causes the display information to be displayed in a predetermined display area based on the information relating to display included in the correspondence data Q from the remote working machine 1.

Main characteristic items and effects of remote devices 30 and remote manipulation systems 100 in example embodiments described above are as follows.

(Item A1) A remote device 30 including a first communicator 33 to communicate with a plurality of types of remote working machines 1, a remote manipulator 35 to remotely manipulate a remote working machine 1 which is one of the plurality of types of remote working machines 1 via the first communicator 33, and a display 34 to display, on a remote manipulation screen G, information relating to remote manipulation of the remote working machine 1, wherein the display 34 is configured to cause at least one of (i) display information to be displayed on the remote manipulation screen G or (ii) a display form of the display information to differ depending on a type of the remote working machine 1.

With the remote device 30 according to item A1, remote manipulation of remote working machines 1 of different types can be achieved, and when the remote working machine 1 of each type is remotely manipulated, a remote user can appropriately recognize information from the display 34.

(Item A2) The remote device 30 according to item A1, wherein the display 34 is configured to display, on the remote manipulation screen G, (i) a main display area 80 in which the display information and the display form of the display information are common to the plurality of types of working machines 1 and (ii) a sub-display area 90 in which at least one of the display information or the display form of the display information differs depending on the type of the remote working machine 1.

With the remote device 30 according to item A2, even when a remote user remotely manipulates the remote working machines 1 of different types, common information regardless of the type is displayed in the main display area 80 and information for each type is displayed in the sub-display area 90, thus the remote user can easily understand the information necessary for the remote manipulation without confusion.

(Item A3) The remote device 30 according to item A2, wherein the sub-display area 90 is adjacent to the main display area 80 and is around the main display area 80.

With the remote device 30 according to item A3, a remote user can easily and intuitively identify whether the information displayed on the display 34 is information common to any remote working machine 1 or information per type of remote working machine 1.

(Item A4) The remote device 30 according to item A2 or A3, wherein the display 34 is configured to display, in the main display area 80, one or more captured images each of which is an image of an area in a direction common to the plurality of types of working machines 1, and display, in the sub-display area 90, one or more captured images each of which is an image of an area in a direction that differs depending on the type of the remote working machine 1.

With the remote device 30 according to item A4, a captured image of an area in the common direction regardless of the type of the remote working machine 1 is displayed in the main display area 80, thus a remote user can recognize the situation of the area in the common direction, whereas a captured image of an area in the direction depending on the type of the remote working machine 1 is displayed in the sub-display area 90, thus a remote user can appropriately recognize the situation of the area for each type of the remote working machine 1.

(Item A5) The remote device 30 according to item A4, wherein the display 34 is configured to display, in a first main area 81 of the main display area 80, a first captured image 71A to 71C of an area in a direction of travel of the remote working machine 1.

With the remote device 30 according to item A5, a captured image of an area in the direction of travel and captured image(s) depending on the type of the remote working machine 1 can be displayed at the same time, thus a remote user can appropriately perform remote manipulation.

(Item A6) The remote device 30 according to item A5, wherein the first main area 81 is located at a central portion of the remote manipulation screen G.

With the remote device 30 according to item A6, a remote user can intuitively recognize that a displayed captured image indicates the direction of travel.

(Item A7) The remote device 30 according to item A5 or A6, wherein the display 34 is configured to, in a first sub-area 91 of the sub-display area 90, in a case that the remote working machine 1 is a first working machine 1A, 1B, display a second captured image 72A, 72B of a surrounding area of a working device 2 of the first working machine 1A, 1B that is an area in a direction different from the first captured image 71A, 71B, and in a case that the remote working machine 1 is a second working machine 1C of a different type from the first working machine 1A, 1B, display a third captured image 73C of an area in a direction different from the direction of travel.

With the remote device 30 according to item A7, different captured images are displayed for the first working machines 1A and 1B and for the second working machine 1C, thus a remote user can appropriately perform remote manipulation.

(Item A8) The remote device 30 according to item A7, wherein the second captured image 72A, 72B is an image of an area in a direction opposite to the direction of travel.

With the remote device 30 according to item A8, a remote user can recognize the situation of an area in the direction opposite to the direction of travel of the remote working machine 1.

(Item A9) The remote device 30 according to any one of items A2 to A8, wherein the display 34 is configured to display device information 63 relating to a working device 2, 40, 50, 51, 52 of the remote working machine 1, and the device information 63 differs depending on the type of the remote working machine 1 and is displayed at least in a second sub-area 92 of the sub-display area 90.

With the remote device 30 according to item A9, a remote user can look at the display 34 and recognize the information relating to the working device 2, 40, 50, 51, or 52 corresponding to the type of the remote working machine 1.

(Item A10) The remote device 30 according to item A9, wherein the display 34 is configured to display, in a third sub-area 93 of the sub-display area 90, the device information 63 or a fourth captured image 74A to 74C of an area in a lateral direction of the remote working machine 1 depending on the type of the remote working machine 1.

With the remote device 30 according to item A10, the device information 63 and the captured image of an area in a lateral direction can be selectively displayed according to the type of the remote working machine 1, thus a remote user can appropriately perform remote manipulation.

(Item A11) The remote device 30 according to any one of items A2 to A10, wherein the display 34 is configured to, in a fourth sub-area 94 of the sub-display area 90, display a map image 64 indicating a position of the remote working machine 1 and display, on the map image 64, supplementary information 65 that differs depending on the type of the remote working machine 1, the map image 64 and the supplementary information 65 being included in the information relating to the remote manipulation.

With the remote device 30 according to item A11, information relating to the position of the remote working machine 1 can be displayed according to the type of the remote working machine 1, thus a remote user can appropriately perform remote manipulation.

(Item A12) The remote device 30 according to item A11, wherein the display 34 is configured to display, on the map image 64, guidance to assist with work performed by the remote working machine 1 according to content of the work, the guidance being included in the supplementary information 65.

With the remote device 30 according to item A12, guidance according to the content of the work can be displayed, thus a remote user can look at the display 34 and perform remote manipulation efficiently.

(Item A13) The remote device 30 according to any one of items A2 to A12, wherein the display 34 is configured to display, in a second main area 82 of the main display area 80, drive information 61 indicating information relating to a drive system of the remote working machine 1 that includes at least one of a prime mover 4A to 4C of the remote working machine 1 or a traveling device 7A to 7C of the remote working machine 1, the drive information being included in the information relating to the remote manipulation.

With the remote device 30 according to item A13, a remote user recognize the information relating to the traveling devices 7A to 7C of the remote working machine 1 by looking at the display 34, thus can appropriately perform remote manipulation.

(Item A14) The remote device 30 according to any one of items A2 to A13, wherein the display 34 is configured to, when there is an alert condition in the remote working machine 1, display alert information 62 relating to the alert condition in the main display area 80 of the remote manipulation screen G.

With the remote device 30 according to item A14, the alert information 62 can be displayed in an area where the remote user's line of sight is directed, thus a remote user can identify the alert information 62 and perform an appropriate operation.

(Item A15) The remote device 30 according to item A14, wherein the display 34 is configured to display, in a first main area 81 of the main display area 80, a first captured image 71A to 71C of an area in a direction of travel of the remote working machine 1, the first captured image 71A to 71C being included in the information relating to the remote manipulation, display, in a second main area 82 of the main display area 80, drive information 61A to 61C indicating information relating to a drive system of the remote working machine 1 that includes at least one of a prime mover 4A to 4C of the remote working machine or a traveling device 7A to 7C of the remote working machine 1, the drive information 61A to 61C being included in the information relating to the remote manipulation, the first main area 81 and the second main area 82 are arranged in an up-down direction, and the alert information 62 is displayed on the first main area 81 or the second main area 82 such that the alert information 62 is superimposed on at least one of the first main area 81 or the second main area 82.

With the remote device 30 according to item A15, less gaze movement is needed when the first captured images 71A to 71C, the drive information 61A to 61C, and the alert information 62 are visually recognized, thus the work load on a remote user can be reduced.

(Item A16) The remote device 30 according to any one of items A1 to A15, wherein the plurality of types of remote working machines 1 include at least two of a tractor 1A with a working device 2 attached thereto, a rice transplanter 1B, or a combine 1C.

With the remote device 30 according to item A16, remote manipulation of the tractor 1A with the working device 2 attached thereto, the rice transplanter 1B, and the combine 1C can be achieved.

(Item A17) The remote device 30 according to item A16 taken in combination with item A7, wherein the first working machine includes at least one of the tractor 1A or the rice transplanter 1B, and the second working machine includes the combine 1C.

With the remote device 30 according to item A17, different captured images can be displayed for at least one of the tractor 1A or the rice transplanter 1B and for the combine 1C, thus a remote user can appropriately perform remote manipulation.

(Item A18) The remote device 30 according to item A16 taken in combination with item A9, wherein the display 34 is configured to, in a case that the type of the remote working machine 1 is the tractor 1A, display information relating to the working device 2 attached to the tractor 1A, the information relating to the working device 2 being included in the device information 63A, in a case that the type of the remote working machine 1 is the rice transplanter 1B, display at least a remaining amount of seedlings or a seedling material including the seedlings, the remaining amount being included in the device information 63B, and in a case that the type of the remote working machine 1 is the combine 1C, display a remaining capacity of a grain tank 52 of the combine 1C, the remaining capacity being included in the device information 63C.

With the remote device 30 according to item A18, a remote user can recognize the device information 63 corresponding to the type of the remote working machine 1 by looking at the display 34.

(Item A19) A remote manipulation system 100 including the remote device 30 according to any one of items A1 to A18, and the remote working machine 1 to be remotely manipulated by the remote device 30, wherein the remote working machine 1 includes a second communicator 23 to mutually communicate with the first communicator 33.

With the remote manipulation system 100 according to item A19, the remote manipulation system 100 which brings about the advantageous effects mentioned above can be achieved.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: remote working machine
- 1A: tractor
- 1B: rice transplanter
- 1C: combine
- 1A, 1B: first working machine
- 1C: second working machine
- 2: working device
- 4A to 4C: prime mover
- 7A to 7C: traveling device
- 23A to 23C: second communicator
- 30: remote device
- 33: first communicator
- 34: display
- 35: remote manipulator
- 40: seedling planter (working device)
- 50: mower (working device)
- 51: thresher (working device)
- 52: grain tank (working device)
- 61 (61A to 61C): drive information
- 62 (62A to 62C): alert information
- 63: device information
- 64: map image
- 65: supplementary information
- 71A to 71C: first captured image
- 72A to 72B: second captured image
- 73C: third captured image
- 74A to 74C: fourth captured image
- 80: main display area
- 81: first main area
- 82: second main area
- 90: sub-display area
- 91: first sub-area
- 92: second sub-area
- 93: third sub-area
- 94: fourth sub-area
- 100: remote manipulation system
- G (GA to GC): remote manipulation screen

## Claims

1. A remote device comprising:
a first communicator to communicate with a plurality of types of remote working machines;
a remote manipulator to remotely manipulate a remote working machine which is one of the plurality of types of remote working machines via the first communicator; and
a display to display, on a remote manipulation screen, information relating to remote manipulation of the remote working machine; wherein
the display is configured to cause at least one of (i) display information to be displayed on the remote manipulation screen or (ii) a display form of the display information to differ depending on a type of the remote working machine.

2. The remote device according to claim 1, wherein the display is configured to display, on the remote manipulation screen, (i) a main display area in which the display information and the display form of the display information are common to the plurality of types of working machines and (ii) a sub-display area in which at least one of the display information or the display form of the display information differs depending on the type of the remote working machine.

3. The remote device according to claim 2, wherein the sub-display area is adjacent to the main display area and is around the main display area.

4. The remote device according to claim 2, wherein the display is configured to:
display, in the main display area, one or more captured images each of which is an image of an area in a direction common to the plurality of types of working machines; and
display, in the sub-display area, one or more captured images each of which is an image of an area in a direction that differs depending on the type of the remote working machine.

5. The remote device according to claim 4, wherein the display is configured to display, in a first main area of the main display area, a first captured image of an area in a direction of travel of the remote working machine.

6. The remote device according to claim 5, wherein the first main area is located at a central portion of the remote manipulation screen.

7. The remote device according to claim 5, wherein the display is configured to, in a first sub-area of the sub-display area:
in a case that the remote working machine is a first working machine, display a second captured image of a surrounding area of a working device of the first working machine that is an area in a direction different from the first captured image; and
in a case that the remote working machine is a second working machine of a different type from the first working machine, display a third captured image of an area in a direction different from the direction of travel.

8. The remote device according to claim 7, wherein the second captured image is an image of an area in a direction opposite to the direction of travel.

9. The remote device according to claim 2, wherein
the display is configured to display device information relating to a working device of the remote working machine; and
the device information differs depending on the type of the remote working machine and is displayed at least in a second sub-area of the sub-display area.

10. The remote device according to claim 9, wherein the display is configured to display, in a third sub-area of the sub-display area, the device information or a fourth captured image of an area in a lateral direction of the remote working machine depending on the type of the remote working machine.

11. The remote device according to claim 2, wherein the display is configured to, in a fourth sub-area of the sub-display area, display a map image indicating a position of the remote working machine and display, on the map image, supplementary information that differs depending on the type of the remote working machine, the map image and the supplementary information being included in the information relating to the remote manipulation.

12. The remote device according to claim 11, wherein the display is configured to display, on the map image, guidance to assist with work performed by the remote working machine according to content of the work, the guidance being included in the supplementary information.

13. The remote device according to claim 2, wherein the display is configured to display, in a second main area of the main display area, drive information indicating information relating to a drive system of the remote working machine that includes at least one of a prime mover of the remote working machine or a traveling device of the remote working machine, the drive information being included in the information relating to the remote manipulation.

14. The remote device according to claim 2, wherein the display is configured to, when there is an alert condition in the remote working machine, display alert information relating to the alert condition in the main display area of the remote manipulation screen.

15. The remote device according to claim 14, wherein
the display is configured to:
display, in a first main area of the main display area, a first captured image of an area in a direction of travel of the remote working machine, the first captured image being included in the information relating to the remote manipulation; and
display, in a second main area of the main display area, drive information indicating information relating to a drive system of the remote working machine that includes at least one of a prime mover of the remote working machine or a traveling device of the remote working machine, the drive information being included in the information relating to the remote manipulation;
the first main area and the second main area are arranged in an up-down direction; and
the alert information is displayed on the first main area or the second main area such that the alert information is superimposed on at least one of the first main area or the second main area.

16. The remote device according to any one of claims 1 to 15, wherein the plurality of types of remote working machines include at least two of a tractor with a working device attached thereto, a rice transplanter, or a combine.

17. The remote device according to claim 16 taken in combination with claim 7, wherein
the first working machine includes at least one of the tractor or the rice transplanter; and
the second working machine includes the combine.

18. The remote device according to claim 16 taken in combination with claim 9, wherein the display is configured to:
in a case that the type of the remote working machine is the tractor, display information relating to the working device attached to the tractor, the information relating to the working device being included in the device information;
in a case that the type of the remote working machine is the rice transplanter, display at least a remaining amount of seedlings or a seedling material including the seedlings, the remaining amount being included in the device information; and
in a case that the type of the remote working machine is the combine, display a remaining capacity of a grain tank of the combine, the remaining capacity being included in the device information.

19. A remote manipulation system comprising:
the remote device according to any one of claims 1 to 15; and
the remote working machine to be remotely manipulated by the remote device; wherein
the remote working machine includes a second communicator to mutually communicate with the first communicator.
